# EUROPÄISCHE PATENTSCHRIFT

(11) **EP 1 626 852 B1**
(45) Veröffentlichungstag und Bekanntmachung des Hinweises auf die Patenterteilung: **18.07.2007**
(21) Anmeldenummer: 04741641.7
(22) Anmeldetag: 24.05.2004
(51) Int. Cl.: B29C 45/14, B29C 70/76, B29C 51/30, B29C 43/18, B29C 67/00

(54) **VERBUNDBAUTEIL UND VERFAHREN ZU DESSEN HERSTELLUNG**
COMPOSITE PART AND METHOD FOR THE PRODUCTION THEREOF
ELEMENT COMPOSITE ET PROCEDE DE PRODUCTION CORRESPONDANT

(30) Priorität: 28.05.2003 DE 10324515; 15.08.2003 DE 10338109; 26.08.2003 DE 10339560
(43) Veröffentlichungstag der Anmeldung: 22.02.2006
(73) Patentinhaber: PEGUFORM GMBH, 79268 Bötzingen (DE)
(72) Erfinder: VENDANGEOT, Francis, FR/ F-68000 COLMAR (FR)
(74) Vertreter: Neunert, Peter Andreas
(86) Internationale Anmeldenummer: PCT/EP2004/050904
(87) Internationale Veröffentlichungsnummer: WO 2004/106044

(56) Entgegenhaltungen:
- DE-A- 3 704 906
- US-A1- 2002 167 113
- US-A1- 2002 193 222

## Beschreibung

Das technische Gebiet der Erfindung betrifft die Herstellung von hohlen Kunststoffformteilen aus Verbundwerkstoffen in Leichtbauweise mittels einer Kombination aus einem Pressverfahren und einem Tiefziehverfahren.

DE 101 12 722 A1 beschreibt ein Kunststoffformteil aus einem Verbundmaterial, welches auf eine Pressform aufgelegt wird und über einen Stempel nach einem Verfahren, welches dem Verfahren des Tiefziehens von Stahlblechen nachgebildet ist, in eine dreidimensionale Struktur gebracht wird, wobei die Wandstärke und die innere Struktur des Verbundmaterials im Wesentlichen erhalten bleiben. In diesem Dokument wird grundsätzlich offenbart, dass eine Kombination eines Pressverfahrens mit einem Tiefziehverfahren möglich ist, allerdings müssen die Randbereiche des Kunststoffformteits nachträglich beschnitten werden, da nach dem beschriebenen Verfahren Schnittabfälle kaum vermeidbar sind.

Das in DE 101 12 635 A1 beschriebene Verfahren und die Vorrichtung zur Herstellung eines dreidimensionalen Formteils betrifft ein Formteil aus einem Verbundwerkstoff, bestehend aus einem Wabenkern, welcher von mindestens zwei Randschichten aus thermoplastischem Material begrenzt ist. Das thermoplastische Material kann selbst ein Verbundwerkstoff sein. Der Vorteil dieses Verfahrens besteht darin, dreidimensionale Kunststoffformteile in einem Arbeitsschritt durch eine Kombination eines Pressverfahrens und eines Tiefziehverfahrens herzustellen, wie auch in DE 101 12 722 A1 bereits vorgeschlagen worden ist. Bei dem thermoplastischen Verbundmaterial handelt es sich um ein glasfaserverstärktes Material, wie ein fließfähiges Polypropylenmaterial mit einer Glasfasermatte (GMT), welches zusammen mit dem Verbundwerkstoff, welcher in der Offenlegungsschrift als Sandwichmaterial bezeichnet ist, in eine Form eingelegt wird. Mittels eines Stempels werden die beiden Schichten bei einem Druck von 10 bis 20 bar in die gewünschte dreidimensionale Form gebracht. Zu beachten ist dabei allerdings, dass die Fliessfähigkeit des GMT-Materials allerdings zur Durchführung eines Tiefziehprozesses erst bei Drücken von 100 bis 200 bar gewährleistet ist. Bei Ausübung des erwähnten geringeren Drucks ist daher nicht davon auszugehen, dass das GMT das Stadium der Fließfähigkeit erreicht, somit ist der Verbund der beiden Schichten nicht gewährleistet. Wenn man in der Tiefziehform einen vor- oder nachgeschalteten Pressvorgang ablaufen lässt, um das GMT Material fließfähig zu machen, muss der Druck auf 100 bis 200 bar erhöht werden. Bei diesem Druck kann aber nicht gewährleistet werden, dass die Struktur des Sandwichmaterials erhalten bleibt, vor allem, wenn das Sandwichmaterial Hohlräume enthält, wie beispielsweise eine Wabenstruktur. Diese Lösung würde bei Verwendung eines einfachen Stempels zur Verpressung des Sandwichmaterials und somit zu einer Verringerung des Querschnitts des Sandwichmaterials führen. Wenn die Rippen der Wabenstruktur, aus welcher das Sandwichmaterial in seinem Kernbereich aufgebaut ist, allerdings zerstört werden, ist der Vorteil des Einsatzes eines Sandwichmaterials zunichte gemacht, nämlich die Erhöhung der Steifigkeit des Sandwichmaterials. In der DE101 12 635 A1 wird dazu ein hydraulischer Zylinder verwendet, welcher die Einhaltung eines bestimmten Toleranzmaßes zwischen Stempel und Negativform garantiert. Mit dieser aufwändigen Werkzeugkonstruktion, nämlich der Herstellung eines Etagenstempels, verteuert sich nicht nur das Werkzeug, sondern es kommt trotzdem zur Zerstörung der Wabenstruktur, vor allem im Bereich der Kanten des Formteils. Somit wird der Vorteil des Sandwichmaterials der erhöhten Steifigkeit teilweise zunichte gemacht. Zudem beschränkt sich die Verwendung des Etagenstempels auf die Anbringung eines Einlegeteils in das Kunststoffformteil. Wenn nun allerdings im Bereich der Kanten des Einlegeteils durch die Zerstörung der Wabenstruktur die Steifigkeit des Sandwichmaterials herabgesetzt ist stellt sich die Frage, inwieweit das Einlegeteil auf Zugkräfte beansprucht werden kann.

In der Patentanmeldung WO0066347 A1 wird ein anderes Verfahren und eine Vorrichtung zur Herstellung eines dreidimensionalen Formteils aus einem Verbundwerkstoff beschrieben, bestehend aus einem hohlen Kern, welcher von faserverstärktem Kunststoffmaterial begrenzt ist. Der hohle Kern entsteht durch Einbringung eines Druckmittels zwischen zwei Schichten des Verbundwerkstoffs, die als Rotationskörper, vorzugsweise als Zylinder ausgeformt sind. Der Verbundwerkstoff wird aufgeheizt, um im fließfähigen Zustand zu einem Formteil mit hohlem Innenraum verformt zu werden. Es besteht die Möglichkeit, diesen Hohlraum nachträglich mit einem Schaummaterial oder ähnlichem aufzufüllen. Mit diesem Verfahren können zwar hohle Formteile von zumindest annähernd rotationssymmetrischem Querschnitt hergestellt werden, allerdings ist es erforderlich, das Verbundmaterial in fließfähigen Zustand zu versetzen, das bedeutet zu erwärmen. Andernfalls müssten zu diesem Zweck Formen vorgesehen werden, welche in ihrer Gesamtheit hochdruckbeständig sind. Dieses Verfahren eignet sich nicht für Verbundbauteile mit dekorativen Oberflächen, wenn die diese dekorativen Oberflächen bildenden Dekorschichten in vielen Fällen eine nicht ausreichende Temperaturbeständigkeit aufweisen. Somit ist man nach diesem Verfahren in der Wahl der Dekormaterialien stark eingeschränkt, wenn die Dekorschicht in einem einzigen Verfahrensschritt mit dem Verbundmaterial zu einem Formteil geformt werden soll. Zudem kann es je nach verwendeter Zusammensetzung des Verbundmaterials durch den Wärmeeinfluss zu unterschiedlichen Wärmespannungen und demzufolge zu Verzug kommen. Diese Gefahr besteht insbesondere bei Verbundmaterialien, die aus mehreren Schichten aufgebaut sind.

In der US 2002/0193222 A1 wird eine Vorrichtung zur Herstellung von Behältern beschrieben, die geeignet ist, ein Verbundmaterial zu einem bruchfesten Behälter mit relativ gleichmäßigen Wandstärken zu verarbeiten.

Die DE 3704906 A1 beschreibt eine isolierende Platte, die weitgehend aus einem lichtdurchlässigen kapillarstrukturierten Kern geringer Dichte und beidseitigen transparenten Deckschichten besteht und dabei an ihrem Umfang eine profilierte Umrandungsstruktur größerer Dichte aufweist.

Die US 2002/0167113 A1 beschreibt gemäß dem Oberbegriff des Anspruchs 1 ein Verfahren zur Verarbeitung von thermoplastischem Material zur Herstellung von Verbundbauteilen.

Es ist Aufgabe der Erfindung, ein Kunststoffformteil als Leichtbauteil aus thermoplastischem Verbundmaterial in einem einzigen Arbeitsschritt herzustellen, wobei die Oberfläche des Verbundmaterials eine Dekorschicht enthalten kann.

Es ist eine weitere Aufgabe der Erfindung, die gesamte Oberfläche mit der Dekorschicht so geringen Drücken wie möglich auszusetzen. Dazu werden nur die Bereiche des Verbundmaterials, dem hohen Druck ausgesetzt, welche mit thermoplastischem Kunststoffmaterial versehen werden sollen. Für die meisten großflächigen Bauteile - beispielsweise für Anwendungen im Fahrzeugbau - ist das Vorhandensein eines zusätzlichen thermoplastischem Kunststoffmaterials nur dort notwendig, wo das Bauteil mit anderen Bauteilen verbunden werden soll, oder wo Einlegeteile angebracht werden sollen.

Es ist eine weitere Aufgabe der Erfindung, Schnittabfälle und die damit verbundenen Kosten zu vermeiden.

Die Aufgaben der Erfindung werden durch die Merkmale des Anspruchs 1 gelöst.

Die Vorrichtung zur Aufnahme von Kunststoffmaterial zur Herstellung dreidimensionaler, dünnwandiger Formteile aus einem thermoplastischen Kunststoffmaterial und einem Verbundmaterial mit thermoplastischen Anteilen enthält eine Pressform, die mit einem inneren Stempel und einem oder mehreren äußeren Stempeln versehen ist. Diese Stempel arbeiten unter verschiedenen Drücken. Durch die verschiedenen Drücke wird somit einerseits der Verbund von Verbundmaterial und thermoplastischem Kunststoffmaterial in einem einzigen Arbeitsschritt hergestellt und andererseits sinken die Kosten zur Herstellung der für das kombinierte Fliesspressverfahren und den Tiefziehverfahren erforderlichen Werkzeuge, da nur der Teil der Form unter hohem Druck arbeiten muss, welcher der Verarbeitung des thermoplastischen Kunststoffmaterials dient Durch den hohen Druck beginnt das thermoplastische Kunststoffmaterial zu fließen und es kommt zu einer Verbindung, welche in ihren mechanischen Eigenschaften mit einer Verschweißung vergleichbar ist. Zur Verbesserung der Verbindung und zu einer Erhöhung der Verformungsgeschwindigkeit kann auch eine teilweise Beheizung der Form vorgesehen werden, wenn die zu verarbeitenden Materialien nicht durch den Wärmeeinfluss Schaden nehmen.

Um derartige Verbundmaterialien für ihren Bestimmungszweck einbaufertig liefern und dementsprechend verbauen zu können, müssen die Randbereiche geformt werden, um Ösen, Verbindungselemente, Schienen und ähnliches aufzunehmen. Daher ist ein thermoplastisches Kunststoffmaterial vorzugsweise in Randbereichen oder Umfangsbereichen des Verbundmaterials angeordnet. Demzufolge sind die äußeren Stempel zumindest in einem Teilbereich nahe der äußeren Begrenzung des Formteils angeordnet und zwar über der besagten Schicht aus thermoplastischem Kunststoffmaterial. Um das thermoplastische Kunststoffmaterial verpressen zu können, entspricht die Auflagefläche des äußeren Stempels im wesentlichen der Fläche des thermoplastischen Materials in verpresstem Zustand.

Das Verbundmaterial wird nur Drücken ausgesetzt, die unbedingt für dessen Formgebung erforderlich sind. Daher handelt es sich bei dem inneren Stempel um einen Niederdruckstempel. Der vom Niederdruckstempel ausgeübte Druck ist kleiner oder gleich 20 bar, je nach Druckbeständigkeit des Verbundmaterials, weil das Verbundmaterial mittels des Niederdruckstempels verpresst wird.

Insbesondere bei ebenen Formteilen ist es vorteilhaft, wenn der Niederdruckstempel mindestens einen Vorsprung aufweist. Dieser Vorsprung dient der sauberen Trennung von Verbundmaterial und thermoplastischem Kunststoffmaterial. Er verhindert, dass insbesondere bei der anschließenden Hochdruckbearbeitung thermoplastisches Kunststoffmaterial auf die Oberfläche des Verbundmaterials gelangt und so der optische Eindruck und die Oberflächeneigenschaften der Oberfläche des Verbundmaterials in Mitleidenschaft gezogen werden.

Bei den äußeren Stempeln handelt es sich um Hochdruckstempel, welche einen Druck von bis zu 250 bar auf das thermoplastische Kunststoffmaterial aufbringen können. Für den Hochdruckverfahrensschritt sind wie auch für den Niederdruckverfahrensschritt im Prinzip voneinander unabhängige Steuerungen der jeweiligen Stempel erforderlich. Insbesondere für ebene Formteile können die beiden Steuerungen jedoch mittels eines Federelements gekoppelt werden. Der Hochdruckstempel und Niederdruckstempel werden im unbelasteten Zustand durch Federkraft in ihrer Position gehalten. Das Federelement bewirkt, dass Hochdruckstempel und Niederdruckstempel relativ zueinander beweglich sind. Dann wird der Niederdruckstempel gemeinsam mit dem Hochdruckstempel auf das Formteil abgesenkt. Bei weiterem Absenken des Hochdruckstempels wird das Federelement zusammengedrückt, wobei durch die gemeinsame Wirkung von Gewichtskraft und Federkraft ein genau definierter Druck auf das Federelement ausgeübt werden kann. Somit kann eine separate Drucksteuerung für den Niederdruckstempel entfallen.

Der Hochdruckstempel verfügt über eine hydraulische Hebevorrichtung und Absenkvorrichtung zur genauen Positionierung desselben und zur Drucksteuerung.

Eine Beschichtung kann mittels eines Druckmittels oder als unter Druck stehende Flüssigkeit durch eine in der Pressform angebrachte Zuleitung eingeleitet werden. Die Zuleitung kann mindestens eine Düsenvorrichtung enthalten. Mittels der Düsenvorrichtung wird die unter Druck stehende Beschichtung entlang des Wandbereichs des thermoplastischen Kunststoffmaterials verteilt. Dazu enthält der Wandbereich eine Ausnehmung, die sich mit unter Druck stehender Beschichtung füllt. Erst dann wird der Hochdruckstempel 0,5 bis 2 mm von der Pressform entfernt, sodass ein Zwischenraum zwischen Pressform und der zu beschichtenden Oberfläche des Formteils entsteht. Die sich entlang des Wandbereichs befindliche, unter Druck stehende Beschichtung füllt den als Hohlraum ausgebildeten Zwischenraum zwischen Pressform und Formteil aus. Die Beschichtung kann auch direkt über eine Zuleitung mit einer Düse eingebracht werden. Somit breitet sich die Beschichtung von diesem oder diesen Einspritzpunkten ausgehend über die zu beschichtende Oberfläche des Formteils aus.

Das Verfahren zur Herstellung eines dünnwandigen Formteils aus Kunststoff, welches ein thermoplastisches Kunststoffmaterial und ein Verbundmaterial mit thermoplastischen Anteilen enthält, umfasst mehrere Verfahrensschritte, welche in einer einzigen Anlage ablaufen. In einem ersten Verfahrensschritt wird das Verbundmaterial in eine Pressform eingelegt, in einem zweiten Verfahrensschritt thermoplastisches Kunststoffmaterial in Randbereichen des Verbundmaterials positioniert, in einem dritten Verfahrensschritt ein Stempel auf die Oberfläche des Verbundmaterials abgesenkt, in einem vierten Verfahrensschritt ein zweiter Stempel auf das thermoplastische Kunststoffmaterial abgesenkt und in einem fünften Schritt werden alle Stempel von dem verbundenen thermoplastischen Kunststoffmaterial und dem Verbundmaterial entfernt, sodass das fertige Pressteil der Form entnommen werden kann. Der zweite Stempel arbeitet unter einem Druck, unter welchem das thermoplastische Kunststoffmaterial fließfähig wird, wobei es zu einem festen Verbund des thermoplastischen Kunststoffmaterials mit dem Verbundmaterial kommt.

Die das Verbundmaterial aufnehmende Pressform ist entweder eben oder weist ein räumliches, im wesentlichen konkaves Profil auf.

Das Verbundmaterial wird nach einem Ausführungsbeispiel von einem Stempel mit einem konvexen Profil mit einem Oberflächenverlauf, welcher dem konkaven Profil entgegengesetzt ist, in eine dreidimensionale Form gepresst. Somit können mit diesem Verfahren nicht nur ebene Formteile, sondern auch dreidimensionale Formteile hergestellt werden, ohne dass es zu einer Beschädigung des Verbundmaterials kommt.

In Umkehrung der Funktionen von Stempel und Hohlform wird das Verbundmaterial in einem weiteren Ausführungsbeispiel auf eine Pressform in der Form eines Stempels aufgelegt. Dann wird das Verbundmaterial von einem Stempel mit einer hohlen, der stempelartigen Pressform entsprechenden Gegenform in eine dreidimensionale Form gepresst.

Das Verbundmaterial wird von einem thermoplastischen Kunststoffmaterial zumindest teilweise begrenzt, wobei das thermoplastische Kunststoffmaterial bereits verformt wird, bevor die beiden Formhälften geschlossen sind. Mit dieser Maßnahme kann die Zykluszeit verringert werden, da das Verbundmaterial bereits seine endgültige Form erhält, wenn die beiden Formhälften geschlossen sind.

Zur Herstellung des Presslings aus dem Verbundmaterial wird bei geschlossenen Formhälften ein Druck von maximal 20 bar auf das Verbundmaterial aufgebracht. Wenn die Formhälften geschlossenen sind, wird ein Druck von maximal 250 bar auf das thermoplastische Kunststoffmaterial aufgebracht.

Das Verbundmaterial wird durch mindestens einen im Stempel vorgesehenen Vorsprung gepresst. Mit dieser Maßnahme kann verhindert werden, dass thermoplastisches Material in das Verbundmaterial eindringt und es zu einer teilweisen Zerstörung der mittleren Schichten des Verbundmaterials kommt, welche zu einem wesentlichen Anteil aus Hohlräumen oder Zellen bestehen. Dabei wird das Verbundmaterial unter definierten Bedingungen soweit verpresst, dass es im Bereich des Vorsprungs zu einer Verringerung der Dicke des Verbundmaterials kommt. Die mechanischen Eigenschaften des Verbundmaterials bleiben im wesentlichen erhalten, weil es sich um einen örtlich genau begrenzten Bereich handelt. Somit können mit dem Verfahren Formteile mit den nachfolgenden Eigenschaften in einer einzigen Anlage hergestellt werden, in welcher ein Pressverfahren und ein Tiefziehverfahren zu dem sogenannten Fließpressverfahren kombiniert wird.

In einem weiteren Ausführungsbeispiel ist mindestens ein in im Inneren des thermoplastischen Kunststoffmaterials ausgebildeter Hohlraum vorgesehen, welcher während des Pressvorgangs durch den sich aufbauenden Druck eines in dem Hohlraum befindlichen Druckmittels bestehen bleibt. Dieses Ausführungsbeispiel lässt sich in gleicher Weise für ebene Formteile nach einem ersten Ausführungsbeispiel wie auch für dreidimensionale Formteile verwenden.

Bei geschlossenen Formhälften wird ein Druck von maximal 20 bar auf das Verbundmaterial und ein Druck von maximal 250 bar auf das thermoplastische Kunststoffmaterial aufgebracht. Das Verbundmaterial wird durch mindestens einen im Stempel vorgesehenen Vorsprung oder Endabschnitt gepresst.

In weiteren vorteilhaften Ausgestaltungsformen des Verfahrens wird das Druckmittel wird durch eine in der Pressform angebrachte Zuleitung eingeleitet. Die Zuleitung kann mindestens eine Stichvorrichtung enthalten. Mittels der Stichvorrichtung wird der Wandbereich des thermoplastischen Kunststoffmaterials durchstochen. Die Stichvorrichtung reicht in den Hohlraum hinein. Das Druckmittel verbleibt während des Pressvorgangs im thermoplastischen Kunststoffmaterial, wenn das thermoplastische Kunststoffmaterial einen steifen Randbereich ausbilden soll. Das Druckmittel kann nachträglich aus dem Hohlraum im thermoplastischen Kunststoffmaterial entweichen, wenn das Kunststoffmaterial als flexibles, elastisches Verbindungselement ausgestaltet werden soll. Das Druckmittel befindet sich in einem weiteren Ausführungsbeispiel bereits vor der Einlage des thermoplastischen Kunststoffmaterials im Hohlraum des thermoplastischen Kunststoffmaterials.

In einem weiteren, optionalen Verfahrensschritt werden alle Stempel von dem nach einem der vorhergehenden Ausführungsbeispiele verbundenen thermoplastischen Kunststoffmaterial und dem Verbundmaterial um ein geringes Maß entfernt, sodass ein Zwischenraum entsteht, in welchen eine Beschichtung eingespritzt wird. Nach Aushärtung der Beschichtung wird in einem anschließenden Schritt das fertige Pressteil der Form entnommen.

Das Formteil umfasst zumindest einen Außenbereich aus thermoplastischem Kunststoffmaterial, welcher ein Verbundmaterial zumindest teilweise umschließt, wobei das Verbundmaterial einen mehrschichtigen Aufbau aufweist und mindestens eine Kernschicht und je eine Verstärkungsschicht umfasst, wobei die Kernschicht einen zellenartigen Aufbau hat, und die Verstärkungsschichten aus thermoplastischem Material bestehen. Das Verbundmaterial ist zumindest an Teilen seines Umfangs von thermoplastischem Kunststoffmaterial umgeben und enthält mindestens einen Hohlraum. Der Hohlraum bietet neben dem Vorteil der Gewichtsreduktion auch die Möglichkeit, dünnwandige Verbindungsstrukturen zu erzeugen, die elastische Eigenschaften aufweisen. Somit können Bereiche des thermoplastischen Kunststoffmaterials auch die Funktion eines Verbindungselements erfüllen.

In vorteilhaften Ausführungsbeispielen besteht der zellenartige Aufbau des Kernmaterials des Verbundmaterials aus einer Wabenstruktur. Diese Wabenstruktur übernimmt auch die Funktion eines Gerippes um den Abstand der Deckschichten festzulegen. Ein Formteil aus einem derartigen Verbundmaterial weist fast dieselbe Biegesteifigkeit wie ein Formteil aus einem thermoplastischen Material auf, bietet aber den Vorteil eines stark reduzierten Gewichts. Wenn die Biegesteifigkeit nicht von so großer Bedeutung ist, weist der zellenartige Aufbau Schaumstruktur auf, wobei die Pressdrücke an das verwendete Schaummaterial angepasst werden müssen. Anstatt einer Wabenstruktur ist es auch möglich, eine Gitterstruktur oder Zellstruktur zu verwenden, welche mit der Wabenstruktur vergleichbare Eigenschaften hat, was die Formbeständigkeit und Steifigkeit des Verbundmaterials betrifft. Dadurch, dass das Sandwichmaterial großflächig nicht mehr durch den hohen Druck in Mitleidenschaft gezogen wird, bleibt die Steifigkeit des Materials erhalten, weil die Vorteile eines Sandwich materials mit Wabenkern vollumfänglich ausgenützt werden können. Hinzu kommt, dass mechanische Eigenschaften, wie die Materialhärte, gezielt beeinflusst werden können, weil nur abschnittsweise Hochdruck eingesetzt wird.

Eine Vielfalt an Materialien ist für die Verstärkung einsetzbar (z.B. Naturfaser, PP-Faser, Glasfaser oder andere Verstärkungsfasern). Die Verstärkung soll 50% des Grundmaterials nicht überschreiten, um eine ausreichende Fließfähigkeit des Materials zu gewährleisten.

Zusammenfassend ergeben sich nun folgende Vorteile der erfindungsgemäßen Vorrichtung zur Durchführung des erfindungsgemäßen Verfahrens zur Herstellung des erfindungsgemäßen Formteils.

Der größte Teil der Oberfläche des Formteils wird daher nur einem Druck zwischen 5 und 20 bar ausgesetzt, was zur Folge hat, dass der größte Teil der Form nur für einen Druck von maximal 20 bar ausgelegt werden muss. Nur an den Stellen, an welchen ein thermoplastisches Kunststoffmaterial, beispielsweise aus einem glasfaserverstärkten thermoplastischen Kunststoff (GMT Material), aufgetragen werden muss, wird der hohe Druck von 100 bis 250 bar benötigt. Für diese Stellen wird jeweils ein äußerer Stempel konstruiert, welcher diesen Druck auf die Oberfläche des Formteils ausübt. Das thermoplastische Material beginnt zu fließen und kann den gewünschten Oberflächenvertauf annehmen. Daher können Randbereiche nach Wunsch gestaltet werden oder Einlageteile an den Stellen einbracht werden, welche später als Befestigungsstellen und ähnliches dienen. Für Einlageteile, Randleisten oder Hohlprofile wird abschnittsweise ein äußerer Stempel mit Hochdruck beaufschlagt. Die punktförmige oder abschnittsweise Verwendung eines derartigen äußeren Stempels zur Aufbringung des Drucks von 100 bis 250 bar verringert die Investitionsaufwendungen für ein Hochdruckverfahren, wie beispielsweise ein Spritzgießverfahren. Insbesondere für Verbundmaterialien mit großer Ausdehnung machen sich diese Einsparungen deutlich bemerkbar.

Ein weiterer Vorteil der Erfindung besteht in der Gewichtseinsparung. Dadurch, dass das Sandwichmaterial großflächig nicht mehr durch den hohen Druck in Mitleidenschaft gezogen wird, bleibt die Steifigkeit des Materials erhalten, weil die Vorteile eines Sandwichmaterials mit Wabenkern vollumfänglich ausgenützt werden können.

Ein weiterer Vorteil der Erfindung besteht darin, die Materialhärte gezielt beeinflussen zu können, weil nur abschnittsweise Hochdruck eingesetzt wird.

Es ist eine Vielfalt an Materialien für die Verstärkung einsetzbar (Naturfaser, PP-Faser, Glasfaser oder andere Verstärkungsfasern). Die Verstärkung soll 50% des Grundmaterials nicht überschreiten, um eine ausreichende Fließfähigkeit des Materials zu gewährleisten.

Die thermoplastische Schicht ist in einem Ausführungsbeispiel als Hohlkörper ausgebildet, in welchem sich zumindest temporär ein Druckmittel befindet. Die Verwendung eines Hohlkörpers erlaubt eine weitere Gewichtsreduktion. Das thermoplastische Kunststoffmaterial ist zumindest an einem Teil des Umfangs des Verbundmaterials angebracht. In verschiedenen Anwendungsfällen ist es erforderlich, dass nur Teile des Umfangs des Verbundmaterials ein thermoplastisches Kunststoffmaterial aufweisen. Dieses thermoplastische Kunststoffmaterial kann auch ein Einlageteil umschließen oder als Randleiste ausgebildet sein.

In einer weiteren Ausführungsart kann auch ein Hohlprofil vorgesehen sein.

Ein weiterer Vorteil ist die Anbringung einer Beschichtung zu dekorativen Zwecken bereits in der Form selbst Die Beschichtung kann über einen oder mehrere Einspritzpunkte oder über ein mit Beschichtungsmaterial ausgefülltes Volumen entlang mindestens einer Seitenfläche in einen Zwischenraum zwischen Pressform und Formteil eingespritzt werden. Die Möglichkeit, eine Einspritzvorrichtung für Beschichtungen in das Presswerkzeug zu integrieren, erlaubt die Herstellung einer Dekorschicht in der Pressform. Mit diesem Verfahren ist es möglich, ein einbaufertiges Formteil in einer einzigen Maschine herzustellen.

Die Verwendung einer Kombination von thermoplastischem Kunststoffmaterial und Verbundmaterial eröffnet vielfältige Einsatzmöglichkeiten für Verbundmaterialien, welche als Formteile in Maschinen, Fahrzeugen und dergleichen eingebaut werden sollen. Beispiele für die Verwendung derartiger Teile finden sich in Fahrzeugaußenverkleidungen, Ladeböden, Fahrzeugdächern und dergleichen. Wenn das Verbundmaterial ein Strukturbauteil ist, das heißt, Schichten enthält, welche das Verbundmaterial versteifen, aber druckempfindlich sind, ist man beim Einsatz derartiger Verbundmaterialien bisher in der Wahl des Verfahrens eingeschränkt gewesen. Derartige druckempfindliche Schichten sind beispielsweise Schaumschichten oder Schichten mit Verrippungen oder Zellstrukturen, wie beispielsweise Wabenstrukturen. Weil diese Verbundmaterialien im Rahmen des erfindungsgemäßen Verfahrens nur geringen Pressdrücken ausgesetzt sind, erweitert sich die Anwendung des Verfahrens auf eine Vielzahl von Leichtbauteilen.
Fig. 1a ist ein Schnitt durch einen Teil der Form vor Behandlung des Verbundmaterials
Fig. 1b ist ein Schnitt durch einen Teil der Form zur Herstellung des Verbundmaterials
Fig. 1c ist ein Schnitt durch einen Teil der Form zur Anformung des thermoplastischen Kunststoffmaterials an das Verbundmaterial
Fig. 1d ist ein Schnitt durch einen Teil der Form zur Anformung des thermoplastischen Kunststoffmaterials an das Verbundmaterial
Fig. 2a ist ein Schnitt durch ein Bauteil, welches mit dem Verfahren nach Fig. 1a bis 1d hergestellt wurde.
Fig. 2b ist eine Ansicht eines Bauteils nach Fig. 2a
Fig. 3a ist ein Schnitt durch einen Teil der Form vor Behandlung des Verbundmaterials nach einem zweiten Ausführungsbeispiel
Fig. 3b ist ein Schnitt durch einen Teil der Form zur Herstellung des Verbundmaterials
Fig. 3c ist ein Schnitt durch einen Teil der Form zur Anformung des thermoplastischen Kunststoffmaterials an das Verbundmaterial
Fig. 3d ist ein Schnitt durch einen Teil der Form zur Anformung des thermoplastischen Kunststoffmaterials an das Verbundmaterial
Fig. 4a ist ein Schnitt durch ein Bauteil, welches mit dem Verfahren nach Fig. 3a bis 3d hergestellt wurde.
Fig. 4b ist eine Ansicht eines Bauteils nach Fig. 4a
Fig. 5 zeigt weitere mögliche Anwendungsbeispiele der Kombination von Verbundmaterialien mit thermoplastischen Kunststoffmaterialien
Fig. 6 zeigt weitere Anwendungsbeispiele mit zusätzlichen Dekorschichten
Fig. 7a zeigt den ersten Schritt der Herstellung eines dreidimensionalen Verbundmaterials aus einem Plattenmaterial
Fig. 7b zeigt einen zweiten Schritt der Herstellung eines dreidimensionalen Verbundmaterials aus einem Plattenmaterial
Fig. 7c zeigt den letzten Schritt der Herstellung eines dreidimensionalen Verbundmaterials aus einem Plattenmaterial
Fig. 8a zeigt den ersten Schritt der Herstellung eines dreidimensionalen Verbundmaterials aus einem Plattenmaterial nach einem zweiten Ausführungsbeispiel
Fig. 8b zeigt einen zweiten Schritt der Herstellung eines dreidimensionalen Verbundmaterials aus einem Plattenmaterial nach einem zweiten Ausführungsbeispiel
Fig. 8c zeigt den letzten Schritt der Herstellung eines dreidimensionalen Verbundmaterials aus einem Plattenmaterial nach einem zweiten Ausführungsbeispiel
Fig. 9a zeigt einen ersten Schritt der Herstellung eines dreidimensionalen Formteils aus einem Verbundmaterial mit einer zusätzlichen Verstärkungsschicht
Fig. 9b zeigt einen zweiten Schritt der Herstellung eines dreidimensionalen Formteils aus einem Verbundmaterial mit einer zusätzlichen Verstärkungsschicht
Fig. 9c zeigt einen dritten Schritt der Herstellung eines dreidimensionalen Formteils aus einem Verbundmaterial mit einer zusätzlichen Verstärkungsschicht
Fig. 9d zeigt einen vierten Schritt der Herstellung eines dreidimensionalen Formteils aus einem Verbundmaterial mit einer zusätzlichen Verstärkungsschicht
Fig. 10a zeigt einen ersten Schritt der Herstellung eines dreidimensionalen Formteils aus einem Verbundmaterial mit einer zusätzlichen Verstärkungsschicht nach einem zweiten Ausführungsbeispiel
Fig. 10b zeigt einen zweiten Schritt der Herstellung eines dreidimensionalen Formteils aus einem Verbundmaterial mit einer zusätzlichen Verstärkungsschicht nach einem zweiten Ausführungsbeispiel
Fig. 10c zeigt einen dritten Schritt der Herstellung eines dreidimensionalen Formteils aus einem Verbundmaterial mit einer zusätzlichen Verstärkungsschicht nach einem zweiten Ausführungsbeispiel
Fig. 10d zeigt einen vierten Schritt der Herstellung eines dreidimensionalen Formteils aus einem Verbundmaterial mit einer zusätzlichen Verstärkungsschicht nach einem zweiten Ausführungsbeispiel
Fig. 11a zeigt einen ersten Schritt der Herstellung eines ebenen Formteils mit angeformten Hohlprofilen
Fig. 11b zeigt einen zweiten Schritt der Herstellung eines ebenen Formteils mit angeformten Hohlprofilen
Fig. 12a zeigt ein erstes Ausführungsbeispiel für ein Formteil mit unterbrochenen Randbereichen
Fig. 12b zeigt ein erstes Ausführungsbeispiel für ein Formteil mit unterbrochenen Randbereichen
Fig. 13a zeigt ein zweites Ausführungsbeispiel für ein Formteil mit unterbrochenen Rand bereichen
Fig. 13b zeigt ein zweites Ausführungsbeispiel für ein Formteil mit unterbrochenen Randbereichen
Fig. 14 zeigt eine Anordnung für die Zuleitung von Druckmittel nach einem ersten Ausführungsbeispiel
Fig. 15 zeigt eine Anordnung für die Zuleitung von Druckmittel nach einem zweiten Ausführungsbeispiel
Fig. 16a zeigt Details des Übergangs von thermoplastischem Kunststoffmaterial zu Verbundmaterial
Fig. 16b zeigt Details des Übergangs von thermoplastischem Kunststoffmaterial zu Verbundmaterial nach einem zweiten Ausführungsbeispiel
Fig. 16c zeigt ein Detail der Ausbildung der Kante zwischen Pressform und Hochdruckstempel
Fig. 17a ist ein Schnitt durch einen Teil der erfindungsgemäßen Form vor Behandlung des Verbund materials
Fig. 17b ist ein Schnitt durch einen Teil der erfindungsgemäßen Form zur Herstellung des Verbundmaterials
Fig. 17c ist ein Schnitt durch einen Teil der erfindungsgemäßen Form zur Anformung des thermoplastischen Kunststoffmaterials an das Verbundmaterial
Fig. 17d ist ein Schnitt durch einen Teil der erfindungsgemäßen Form zur Anformung des thermoplastischen Kunststoffmaterials an das Verbundmaterial
Fig. 17e ist ein Schnitt durch einen Teil der erfindungsgemäßen Form zur Anformung des thermoplastischen Kunststoffmaterials an das Verbundmaterial
Fig. 18a ist ein Schnitt durch ein Bauteil, welches mit dem Verfahren nach Fig. 17a bis 17e hergestellt wurde.
Fig.18b ist eine Ansicht eines Bauteils nach Fig. 18a
Fig. 19 zeigt weitere mögliche Anwendungsbeispiele der Kombination von Verbundmaterialien mit thermoplastischen Kunststoffmaterialien
Fig. 20 zeigt weitere Anwendungsbeispiele mit zusätzlichen Dekorschichten
Fig. 21a zeigt den ersten Schritt der Herstellung eines dreidimensionalen Verbundmaterials aus einem Plattenmaterial
Fig. 21b zeigt einen zweiten Schritt der Herstellung eines dreidimensionalen Verbundmaterials aus einem Plattenmaterial
Fig. 21c zeigt den letzten Schritt der Herstellung eines dreidimensionalen Verbundmaterials aus einem Plattenmaterial
Fig. 22a zeigt einen ersten Schritt der Herstellung eines dreidimensionalen Formteils aus einem Verbundmaterial mit einer zusätzlichen Verstärkungsschicht
Fig. 22b zeigt einen zweiten Schritt der Herstellung eines dreidimensionalen Formteils aus einem Verbundmaterial mit einer zusätzlichen Verstärkungsschicht
Fig. 22c zeigt einen dritten Schritt der Herstellung eines dreidimensionalen Formteils aus einem Verbundmaterial mit einer zusätzlichen Verstärkungsschicht
Fig. 22d zeigt einen vierten Schritt der Herstellung eines dreidimensionalen Formteils aus einem Verbundmaterial mit einer zusätzlichen Verstärkungsschicht
Fig. 23a zeigt eine Einspritzung entlang eines Flächenbereichs im Schnitt
Fig. 23b zeigt eine Einspritzung entlang eines Flächenbereichs in einer Ansicht von oben unter Weglassung des Stempels.
Fig. 24 zeigt ein Ausführungsbeispiel mit unterbrochenen Randbereichen

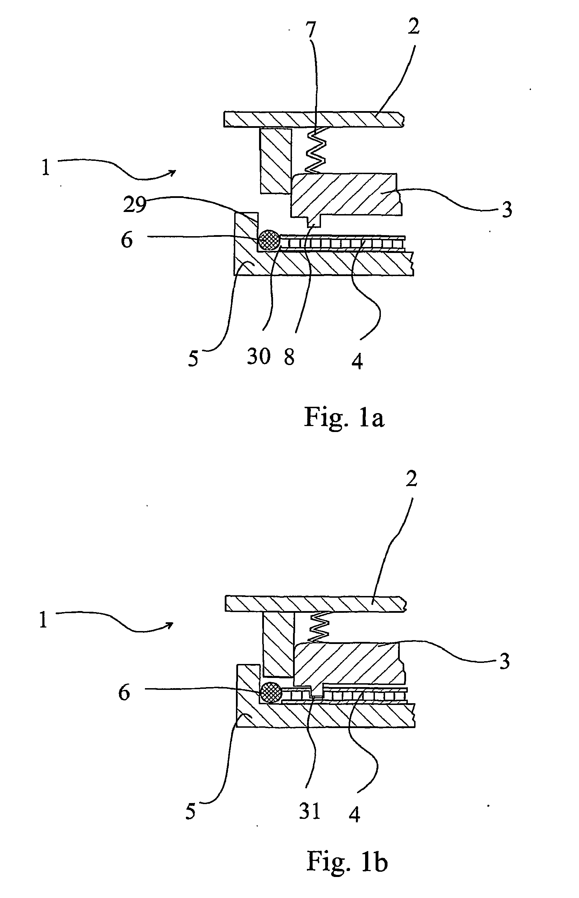

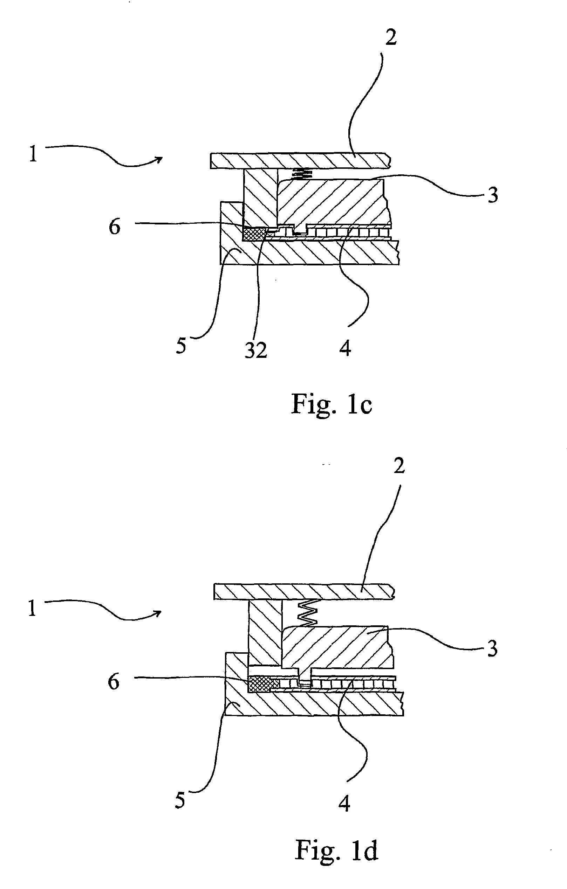

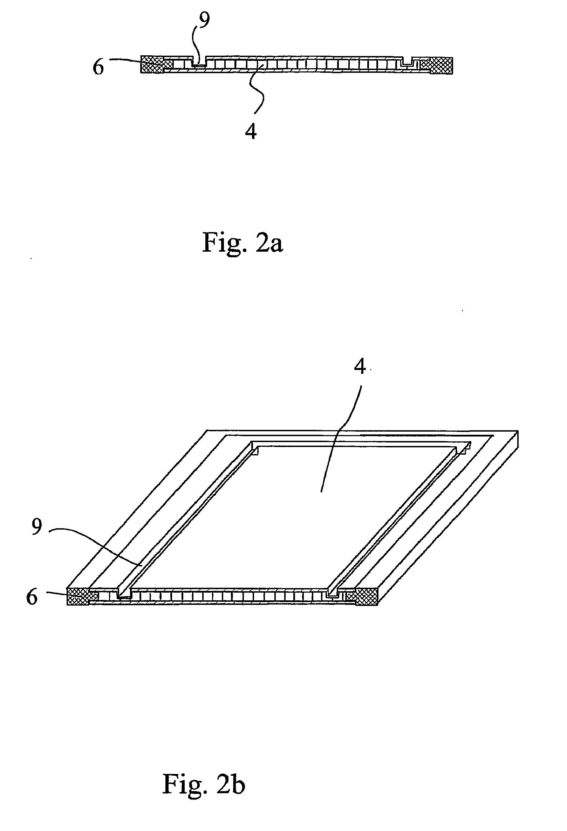

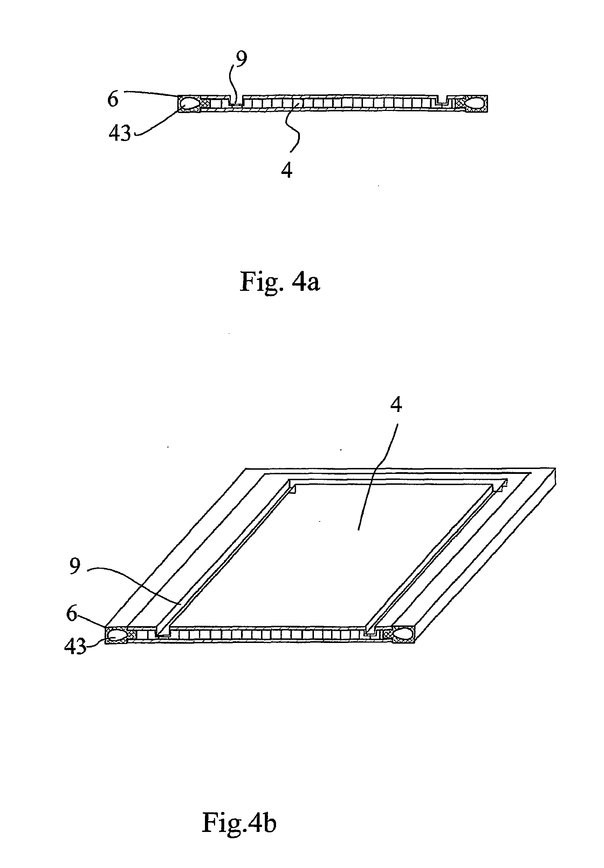

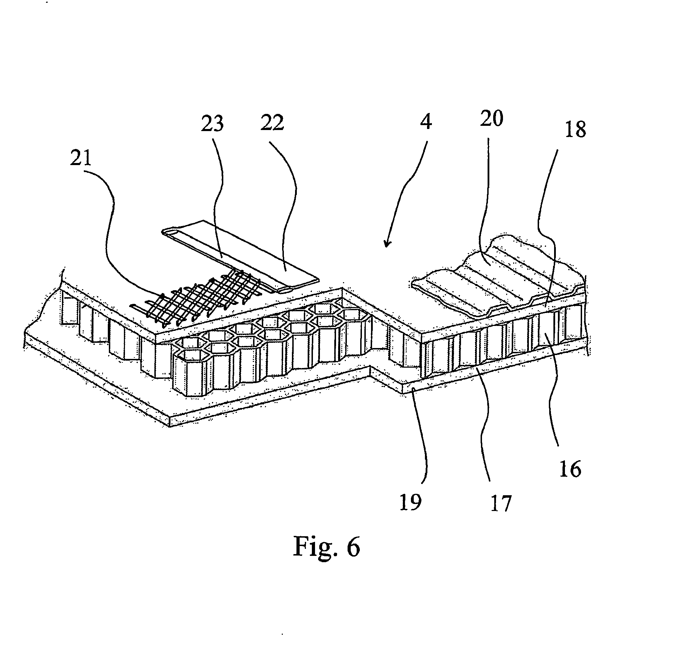

In Fig. 1a wird der erste Schritt zur Herstellung eines Bauteils dargestellt. Dazu wird ein mehrschichtiges Verbundmaterial 4 in eine Pressform 5 eingelegt. In den Randbereichen des Verbundmaterials 4 wird zumindest abschnittsweise ein thermoplastisches Kunststoffmaterial 6 z.B. als Strang oder Wulst gelegt. Der Querschnitt des thermoplastischen Kunststoffmaterials ist an sich unerheblich, solange sich das den Querschnitt bildende Kunststoffmaterial in dem Zwischenraum zwischen Formwand 29 und dem Rand 30 des Verbundmaterials unter Druck so verteilen kann, dass es eine Dicke von mindestens 2 mm aufweist. Das Verbundmaterial weist ungefähr eine Dicke von 5 mm auf.
Dann wird nach der Darstellung in Fig. 1 b ein mehrteiliger Stempel abgesenkt. Dieser Stempel besteht aus mindestens einem Hochdruckstempel 2 und einem Niederdruckstempel 3. Die Hochdruckstempel und Niederdruckstempel können durch Federelemente 7 miteinander gekoppelt sein, wie in diesem Ausführungsbeispiel dargestellt. In Fig. 1b ist das Federelement entlastet. Sobald der Niederdruckstempel 2 auf die Oberfläche des Verbundmaterials auftrifft, wird das Federelement belastet. Der Niederdruckstempel kann einen oder mehrere Vorsprünge 8 aufweisen, die mit Zunahme der Federkraft den Bereich 31 des Verbundmaterials plastisch verformen, welcher unter dem Vorsprung liegt. Dabei wird im wesentlichen die Hohlraumstruktur der Kemschicht (zu dem Aufbau des Verbundmaterials siehe Fig. 2a, Fig. 2b, Fig. 4) zerstört, welche einer derartigen lokalen Belastung nicht stand hält.
Gleichzeitig werden die Hochdruckstempel, von denen in Fig. 1b nur ein einziger dargestellt ist, weiter in Richtung des thermoplastischen Kunststoffmaterials - also in der Zeichnung nach unten - verschoben, bis sie mit dem thermoplastischen Kunststoffmaterial in Kontakt kommen.
In Fig. 1c ist dargestellt, wie das thermoplastische Kunststoffmaterial den zur Verfügung stehenden Querschnitt ausfüllt. Um einen festen Verbund zwischen dem Verbundmaterial 4 und dem thermoplastischen Kunststoffmaterial 6 zu erreichen, kann es vorteilhaft sein, den Hochdruckstempel soweit abzusenken, dass die Struktur der Kernschicht im Randbereich zerstört wird. Durch den Druck von bis zu 250 bar dringt das fließfähige thermoplastische Kunststoffmaterial in die Kernschicht ein und kann auch, wie in Fig. 1d dargestellt, die Randbereiche der Deckschichten oder Mantelschichten 32 des Verbundmaterials umhüllen. Wenn die Deckschichten des Verbundmaterials ebenfalls aus einem faserverstärkten, fließfähigen Kunststoff ausgebildet sind, beginnen auch die Mantelschichten selbst zu fließen und so einen homogenen Übergang von thermoplastischem Kunststoffmaterial und Verbundmaterial auszubilden. Das thermoplastische Kunststoffmaterial füllt die Hohlräume bis zu dem vom Vorsprung 8 eingedrückten Bereich 31. Somit hat der Vorsprung 8 auch die Funktion, die unkontrollierte Ausbreitung des thermoplastischen Kunststoffmaterials in die Kernschicht zu unterbinden.
In Fig. 1d ist eine Variante mit einem gleichmäßigen Querschnittsübergang von thermoplastischem Kunststoffmaterial und Verbundmaterial dargestellt. Gleichzeitig ist in Fig. 1d der letzte Schritt des Fließpressverfahrens dargestellt. Die Hochdruckstempel und Niederdruckstempel werden dann in die Ausgangsposition zurückgefahren.
Das Verbundmaterial nach Fig. 2a, Fig. 2b und Fig. 6 wird aus Gründen der Gewichtsreduktion eingesetzt, trotzdem ist es möglich, ein Leichtbauteil mit hoher Steifigkeit herzustellen. Aus diesem Grund besteht das Verbundmaterial aus mindestens einer Schicht, die einen wesentlichen Anteil an Hohlräumen aufweist. Diese sogenannte Kernschicht wird dann von Verstärkungsschichten aus Kunststoffmaterial umgeben, wobei das Kunststoffmaterial zusätzlich faserverstärkt sein kann. Würde man den gesamten Querschnitt aus demselben Kunststoffmaterial fertigen, beträgt der Gewichtsunterschied bis zu 40%. Da die von der Kernschicht eingenommenen mittleren Querschnittsabschnitte kaum zur Biegesteifigkeit beitragen, werden diese Querschnittsbereiche soweit möglich durch eine Schicht mit einer Struktur aus vielen Hohlräumen ersetzt. Mit dieser Maßnahme wird die Biegesteifigkeit nur unwesentlich verringert, da die Randbereiche aus faserverstärktem Kunststoff die Hauptlast tragen. Allerdings ist die Stabilität gegenüber Druckkräften, welche auf die Oberfläche wirken, vermindert. Daher werden derartige Verbundbauteile unter möglichst geringem Druck bei einer Temperatur, bei welcher es zum Erweichen der Schichten kommt in einem Pressverfahren hergestellt.
In einem ersten Ausführungsbeispiel das Verbundmaterial 4 eine Sandwichstruktur auf, wobei diese vorzugsweise aus einem wabenförmigen Material 16 im Kembereich besteht und mindestens je eine Verstärkungsschicht 17, 18 enthält.
Die Kemschicht 16 besteht beispielsweise aus Polypropylen und die Verstärkungsschichten 17,18 aus einem faserverstärkten Polypropylen.
In einer weiteren Ausgestaltung der Erfindung kann die Kemschicht 16 aus expandiertem Polypropylen oder aus einem Schaummaterial mit oder ohne Verstärkungsrippen bestehen. Die Verwendung eines geschäumten Kernmaterials erfüllt die Forderungen nach Leichtbauweise, bietet die Möglichkeit, je nach Schaumdichte verschiedenste Verhältnisse von Bauteilvolumen zu Bauteilgewicht zu realisieren und bietet eine recyclinggerechte Materialauswahl, da die Kernschicht fast ausschließlich aus Polypropylen hergestellt werden kann und somit ein Monomaterialkonzept realisiert werden kann.
Wenn ein Monomaterialkonzept nicht gewünscht wird, ist es auch möglich, verschiedenste Materialien mit unterschiedlichen Schmelzpunkten zu kombinieren. Da das Verfahren ausschließlich unter Druck arbeitet und es nicht zu einer wesentlichen Erwärmung der Schichten kommt, bietet das Verfahren die Möglichkeit, verschiedenste Kunststoffmaterialien, oder auch Hybridbauteile (das heißt Kunststoff-Metall-Verbundbauteile) zu kombinieren, um Formteile herzustellen.
Für im wesentlichen ebene Formteile können Sandwichmaterialien eingesetzt werden, welche duroplastische Kunststoffe in der Verstärkungsschicht enthalten und eine Papierschicht mit einer Wabenstruktur oder einer anderen Struktur regelmäßig angeordneter, von Stützwänden begrenzter Hohlräume enthalten, die von den obengenannten Verstärkungsschichten umgeben ist. In diesem Fall ist es möglich, als Verstärkungsschichten Fasermatten einzusetzen, welche mittels eingespritztem duroplastischen Material imprägniert werden, was eine optisch gute Oberflächenqualität des Formteils ergibt. Das duroplastische Material wird während des Pressvorgangs eingespritzt. Die Möglichkeit des Einspritzens duroplastischen Materials besteht auch bei beliebigen dreidimensionalen Formteilen, welche mit dem Fließpressverfahren hergestellt werden sollen. Somit handelt es sich um eine Möglichkeit, ein Formteil mit optisch ansprechender Oberfläche mittels des Einspritzens des duroplastischen Materials zu erhalten. Als duroplastische Materialien kommen insbesondere Polyurethane, Polyester oder Epoxidharze zum Einsatz.

Auch andere Dekorschichten können auf den Oberflächen der Verstärkungsteile vorgesehen werden. Die Beschichtung 19 kann als Lack, als Film oder als Formhaut ausgebildet sein, die bei ausreichender Druckbeständigkeit zusammen mit dem Sandwichmaterial verpresst wird, andernfalls in einem nachträglichen Bearbeitungsschritt aufgetragen werden soll.
Die Verwendung von Dekorschichten, die eine Struktur aufweisen, erlaubt es, auch Stoffe, Vliese, Matten und andere Gewebestrukturen zu dekorativen Zwecken mit dem Sandwichmaterial zu verbinden. Es ist darauf zu achten, dass in den Bereichen, in denen der Hochdruckstempel wirkt, derartige Schichten nicht vorgesehen werden müssen, weil die Gefahr besteht, dass die Schichten durch den hohen Druck Schaden erleiden. Um diese Schädigungen zu vermeiden, kann auch vorgesehen werden, die Pressform selbst mit einer Struktur zu versehen, welche die Dekorschicht(en) aufnimmt. Diese Strukturen können auch abschnittsweise vorgesehen werden, um verschiedene Dekorschichten zu kombinieren. Dabei ist eine Trennlinie zwischen verschiedenen Dekorschichten ebenfalls durch einen Eintrag von Hochdruck entlang einer Linie herstellbar. Entlang dieser Linie fließt Kunststoffmaterial unter Druck in einen Kanal, welcher die Form der Trennlinie aufweist. Das fließfähige Kunststoffmaterial kann auch unter die Dekorschichten eingelegt werden, sodass der Fliessvorgang zwischen den Randbereichen der Dekorschichten und der Verstärkungsschicht statt findet.
Andere Deckschichten machen die Verformungsbewegungen mit, wie beispielsweise Vliese. Vliese haben eine unregelmäßige Faserstruktur, wobei die Fasern gegeneinander beweglich sind. Diese Beweglichkeit kann dazu genützt werden, die Vliesschicht mit dem Verbundmaterial mit zu verformen. Auch dreidimensionale Formteile lassen sich mit einer derartigen Vliesschicht herstellen.
Da eine Vliesschicht auch die Oberflächenrauhigkeit erhöht, ist es auch möglich, diese Schicht mit einer Lackschicht zu tränken oder mit einer Folie zu verkleben oder sogar in einem einzigen Arbeitsschritt eine Dekorschicht in der Form auf die Vliesschicht auf dem Verbundmaterial aufzuspritzen.

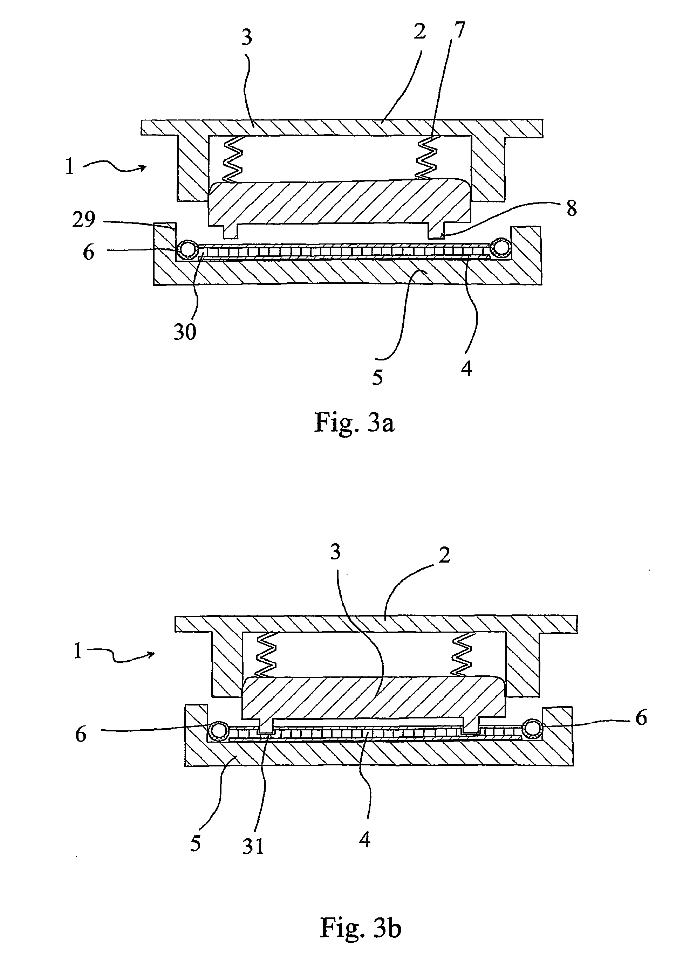

In Fig. 3a wird der erste Schritt zur Herstellung eines Formteils nach einem weiteren Ausführungsbeispiel dargestellt. Dazu wird ein mehrschichtiges Verbundmaterial 4 in eine Pressform 5 eingelegt. In den Randbereichen des Verbundmaterials 4 wird zumindest abschnittsweise ein thermoplastisches Kunststoffmaterial 6 als Strang oder Wulst gelegt. Das thermoplastische Kunststoffmaterial 6 weist mindestens einen Hohlraum 43 auf, welcher mit einem Druckmittel gefüllt ist. Das den Querschnitt bildende thermoplastische Kunststoffmaterial verteilt sich in dem Zwischenraum zwischen Formwand 29 und dem Rand 30 des Verbundmaterials unter Druck derart, dass es eine Dicke von mindestens 2 mm aufweist. Das Verbundmaterial weist ungefähr eine Dicke von 5 mm auf.
Dann wird nach der Darstellung in Fig. 3b ein mehrteiliger Stempel abgesenkt. Dieser Stempel besteht aus mindestens einem Hochdruckstempel 2 und einem Niederdruckstempel 3. Die Hochdruckstempel und Niederdruckstempel können durch Federelemente 7 miteinander gekoppelt sein, wie in diesem Ausführungsbeispiel dargestellt wird. In Fig. 3b ist das Federelement entlastet. Sobald der Niederdruckstempel 2 auf die Oberfläche des Verbundmaterials auftrifft, wird das Federelement belastet. Der Niederdruckstempel kann einen oder mehrere Vorsprünge 8 aufweisen, die mit Zunahme der Federkraft den Bereich 31 des Verbundmaterials plastisch verformen, welcher unter dem Vorsprung liegt. Dabei wird im wesentlichen die Hohlraumstruktur der Kernschicht (zu dem Aufbau des Verbundmaterials siehe Fig. 2a, Fig. 2b, Fig. 4a, Fig. 4b, Fig. 6) zerstört, welche einer derartigen lokalen Belastung nicht stand hält.
Gleichzeitig werden die Hochdruckstempel, von denen in Fig. 1b nur ein einziger dargestellt ist, weiter in Richtung des thermoplastischen Kunststoffmaterials - also in der Zeichnung nach unten - verschoben, bis sie mit dem thermoplastischen Kunststoffmaterial in Kontakt kommen.

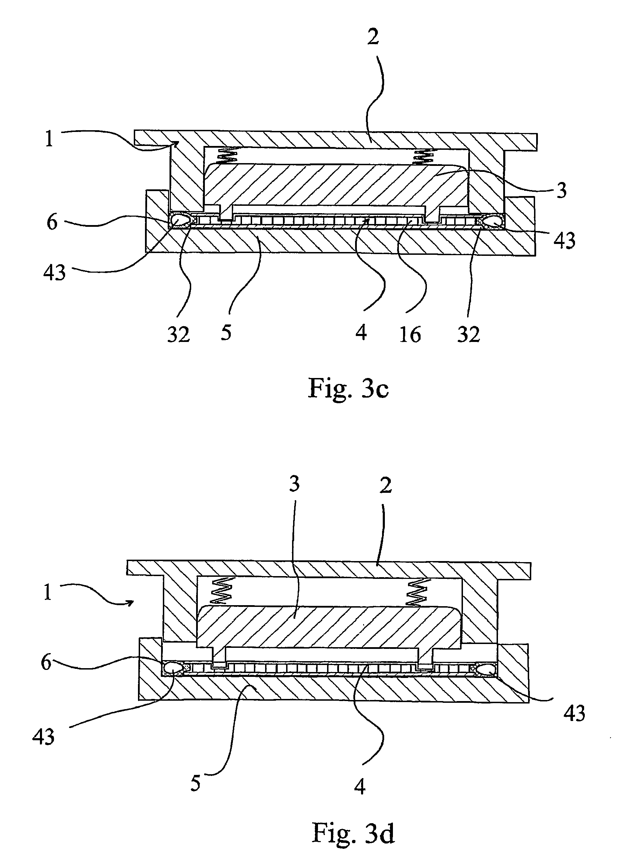

In Fig. 3c ist dargestellt, wie das thermoplastische Kunststoffmaterial 6 den zur Verfügung stehenden Querschnitt ausfüllt. Um einen festen Verbund zwischen dem Verbundmaterial 4 und dem thermoplastischen Kunststoffmaterial 6 zu erreichen, kann es vorteilhaft sein, den Hochdruckstempel 2 soweit abzusenken, dass die Struktur der Kernschicht 16 im Randbereich zerstört wird. Durch den Druck von bis zu 250 bar dringt das fließfähige thermoplastische Kunststoffmaterial in die Kemschicht ein und kann auch, die Randbereiche der Deckschichten oder Mantelschichten 32 des Verbundmaterials 4 umhüllen. Der Hohlraum 43 wird dabei in begrenztem Ausmaß mitverformt. Wenn das Innere des Hohlraums 43 selbst unter Druck steht, ist gewährleistet, dass die Wandstärke des thermoplastischen Kunststoffmaterials über den Hohlquerschnitt annähernd konstant ist. Wenn die Deckschichten des Verbundmaterials ebenfalls aus einem faserverstärkten, fließfähigen Kunststoff ausgebildet sind, beginnen auch die Randbereiche der Deckschichten oder Mantelschichten 32 selbst zu fließen und so einen homogenen Übergang von thermoplastischem Kunststoffmaterial 4 und Verbundmaterial 6 auszubilden. Das thermoplastische Kunststoffmaterial 4 füllt die Hohlräume bis zu dem vom Vorsprung 8 eingedrückten Bereich 31. Somit hat der Vorsprung 8 auch die Funktion, die unkontrollierte Ausbreitung des thermoplastischen Kunststoffmaterials 6 in die Kemschicht 16 zu unterbinden.
In Fig. 3d der letzte Schritt des Fließpressverfahrens dargestellt. Die Hochdruckstempel 2 und Niederdruckstempel 3 werden in die Ausgangspositionen zurückgefahren und das fertige Formteil aus der Pressform entnommen (nicht dargestellt). Vor der Entnahme kann eine Abkühlung des Formteils vorgesehen werden, was insbesondere bei großflächigen Formteilen Verzugsproblemen, die auf thermischen Spannungen beruhen, zuvorkommt. Insbesondere das thermoplastische Kunststoffmaterial sollte genügend ausgehärtet sein, wenn der Hohlraum 43 geschlossen bleiben soll und weiter unter dem Gasdruck steht. Wenn der Hohlraum durch die Anbringung von Verbindungselementen, wie beispielsweise den in Fig. 3 dargestellten Verbindungsleisten 15 durchstoßen wird und ein Druckausgleich erfolgt, kann es bei fertig ausgehärtetem thermoplastischen Material nicht zu Schwindungen kommen.

Das Verbundmaterial nach Fig. 4a, Fig. 4b und Fig. 6 wird aus Gründen der Gewichtsreduktion eingesetzt. Trotz der in der Kemschicht 16 vorhandenen Hohlräumen, Aussparungen oder Zellen ist es möglich, ein Leichtbauteil mit hoher Steifigkeit herzustellen. Die Werte für die Steifigkeit werden im wesentlichen durch die Materialeigenschaften der die Kernschicht begrenzenden Rand- oder Verstärkungsschichten bestimmt. Aus diesem Grund besteht das Verbundmaterial aus mindestens einer Schicht, die einen wesentlichen Anteil an Hohlräumen aufweist. Diese sogenannte Kernschicht 16 wird dann von Verstärkungsschichten 17 aus Kunststoffmaterial umgeben, wobei das Kunststoffmaterial zusätzlich faserverstärkt sein kann. Würde man einen mit Kunststoffmaterial vollständig gefüllten Querschnitt aus demselben Kunststoffmaterial mit Faserverstärkung oder aus mehreren Schichten fertigen, die keine Hohlräume enthalten beträgt der Gewichtsunterschied bis zu 40%. Da die von der Kernschicht eingenommenen mittleren Querschnittsabschnitte kaum zur Biegesteifigkeit beitragen, werden diese Querschnittsbereiche soweit möglich durch eine Schicht mit einer Struktur aus vielen Hohlräumen, Aussparungen oder Zellen ersetzt. Mit dieser Maßnahme wird die Biegesteifigkeit nur unwesentlich verringert, da die Randbereiche aus faserverstärktem Kunststoff die Hauptlast tragen. Allerdings ist die Stabilität gegenüber Druckkräften, welche auf die Oberfläche wirken, vermindert. Daher werden derartige Verbundbauteile unter möglichst geringem Druck bei einer Temperatur, bei welcher es zum Erweichen der Schichten kommt, in einem Pressverfahren hergestellt. Dieses Konzept ist nicht auf das Verbundmaterial des in Fig. 4a, Fig. 4b oder Fig. 6 dargestellten Bauteils begrenzt, sondern kann auch auf den Randbereich, welcher aus thermoplastischem Kunststoffmaterial besteht, ausgedehnt werden.

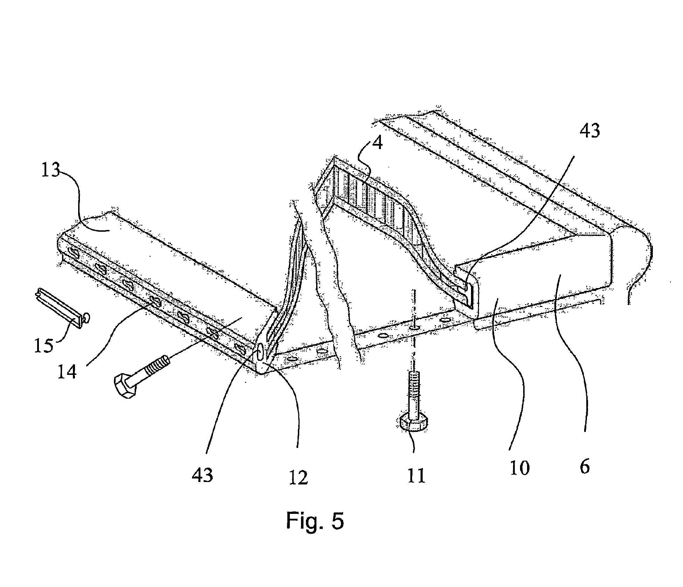

Fig. 5 zeigt mögliche Ausgestaltungen der Randbereiche aus thermoplastischem Kunststoffmaterial und die mögliche Anbringung von Verbindungselementen. Das Verbundmaterial 4 wird dabei von einem thermoplastischen Kunststoffmaterial 6 teilweise ummantelt. Auf dem thermoplastischen Kunststoffmaterial 6 kann ein Blech oder dergleichen als Ummantelung 10 vorgesehen werden. Die Ummantelung 10 kann auch, wie in der Fig. 5 linksseitig dargestellt wird, als Metallaufsatz 13 auf die fließfähige Schicht ausgebildet sein. Ummantelungen 10 und fließfähige Schicht 12 werden in dem Presswerkzeug derart positioniert, dass der Hochdruckstempel 2 auf die Ummantelung wirkt. Durch den Anpressdruck wird das thermoplastische Kunststoffmaterial 6 in fließfähigen Zustand versetzt. Der im thermoplastischen Kunststoffmaterial 6 vorhandene Hohlraum 43 ist dabei mit Druckgas oder Druckflüssigkeit gefüllt. Wenn der Anpressdruck auf das hohle thermoplastische Kunststoffmaterial wirkt.

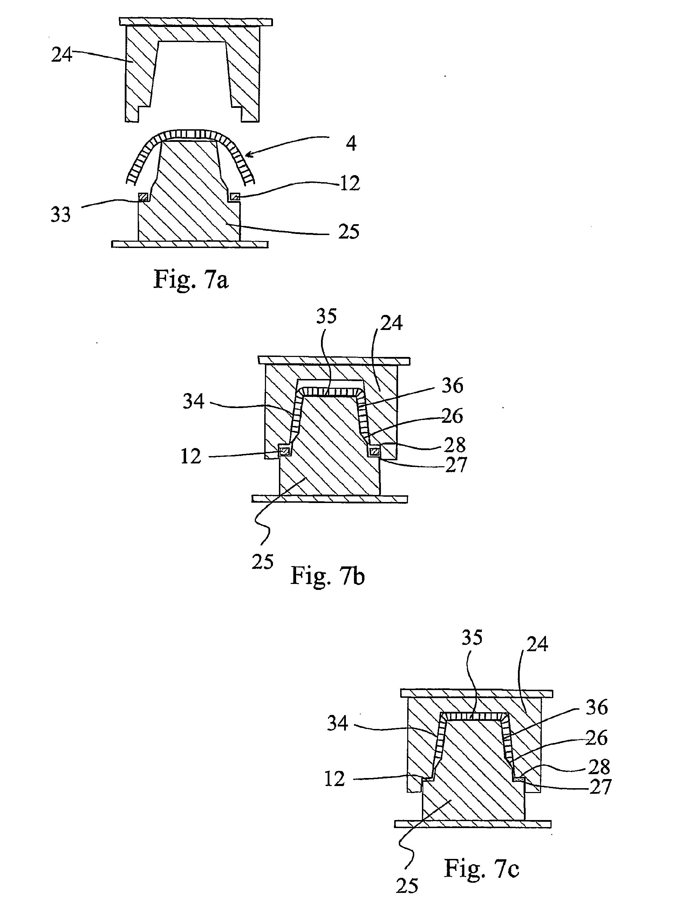

In Fig. 7a wird der erste Verfahrensschritt eines weiteren Ausführungsbeispiels der Erfindung dargestellt. Nach diesem Verfahren wird ein dreidimensionales Formteil aus einem Verbundmaterial 4 hergestellt. Dazu wird ein plattenförmiges Halbzeug auf eine Positivform gelegt. Die Positivform hat eine horizontale Auflagefläche 33, auf welche ein Strang 12 aus einem thermoplastischen, fließfähigen Kunststoffmaterial aufgelegt wird. Die Negativform 24 ist so weit geöffnet, dass das Verbundmaterial 4 und das thermoplastische Kunststoffmaterial eingelegt werden können.
In Fig. 7b ist der Schließvorgang der Negativform dargestellt, welche sich über die Positivform stülpt. Das Verbundmaterial passt sich der Formgeometrie an und wird durch die schrägen Seitenflächen 34 der Negativform 24 nicht nur positioniert, sondern auch leicht gestreckt, sodass es nicht zu Buckeln oder Materialanhäufungen kommt, wodurch einzelne Teilbereiche des Verbundmaterials Schaden erleiden können. Der Abstand der beiden Formhälften entspricht im Bereich der zentralen Auflage des Verbundmaterials 35 der Summe aus der gewünschten Dicke des Verbundmaterials und der Differenz der gewünschten Dicke des thermoplastischen Kunststoffmaterials und der ursprünglichen Dicke des Verbundmaterials. Diese Differenz wird Null, wenn die beiden Dicken identisch sein sollen. Der Abstand des Aufnahmebereichs in der Positivform 28 vom Aufnahmebereich 29 in der Negativform vermindert sich gegenüber dem Abstand der beiden Formhälften im Bereich der zentralen Auflage um die Dicke des Verbundmaterials abzüglich der gewünschten Wandstärke des thermoplastischen Kunststoffmaterials. In dem vorliegenden Ausführungsbeispiel ist eine geringere Dicke des thermoplastischen Kunststoffmaterials vorgesehen. Zudem wird ein fließender Übergang der Dicke des Verbundmaterials zu der Dicke des thermoplastischen Kunststoffmaterials vorgesehen. Dazu hat die Positivform einen Endabschnitt 26, welcher einen von dem Wandabschnitt 36 abweichenden Neigungswinkel aufweist. Im dargestellten Beispiel ist daher ein geringerer Neigungswinkel des Endabschnitts 26 dargestellt.
In Fig. 7c ist dann der Endzustand erreicht. Durch die erhöhte Verpressung des Endabschnitts 26 wird einerseits verhindert, dass das thermoplastische Kunststoffmaterial sich zwischen die beiden Deckschichten in die Strukturschicht einlagert. Wie im ersten Ausführungsbeispiel können an den beiden Formhälften Rippen oder Vorsprünge angebracht werden, die eine lokale Einschnürung des Verbundmaterials bewirken und somit eine weitere Barriere für die Ausdehnung des thermoplastischen Kunststoffmaterials darstellen.
Der letzte Verfahrensschritt der Öffnung der beiden Formhälften ist nicht dargestellt.

Zusätzlich können in dem Bereich des thermoplastischen Kunststoffmaterials im Auflagebereich in der Positivform oder im Aufnahmebereich der Negativform Heizvorrichtungen vorgesehen sein, wodurch eine Fließfähigkeit des Kunststoffmaterials schon bei geringeren Pressdrücken erreicht wird. Je nach gewünschter Dicke des thermoplastischen Kunststoffmaterials, welches den Rahmen oder die Abschlussbereiche des Verbundmaterials bildet, mit welchem das Verbundmaterial mit andere Bauteilen verbunden wird, wird der benötigte Innendruck allein durch die Wahl der Formtoleranzen oder nur durch Kombination der Formtoleranzen mit einer Erwärmung des thermoplastischen Kunststoffmaterials erreicht

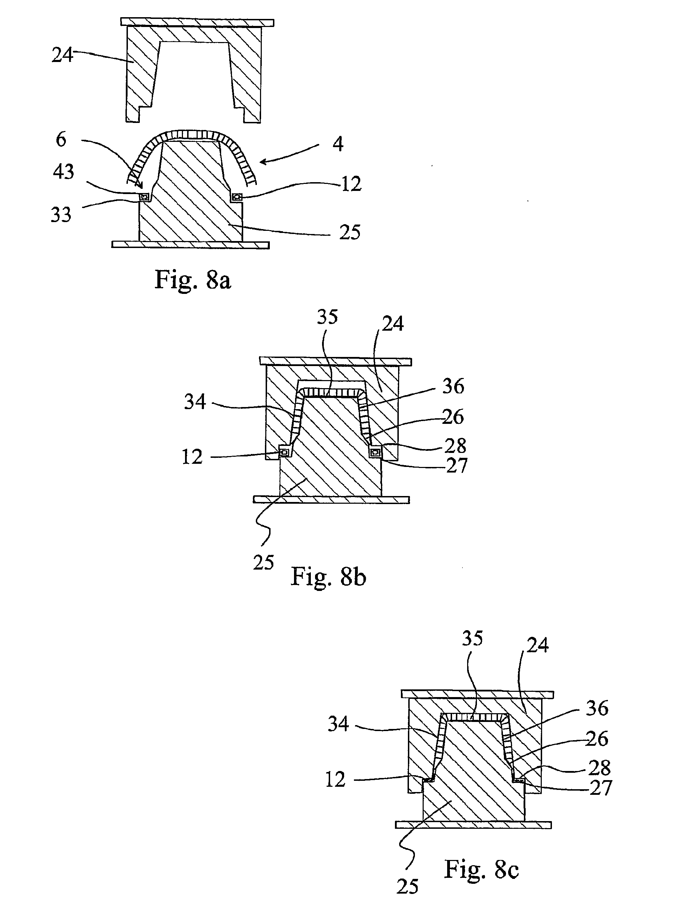

In Fig. 8a wird der erste Verfahrensschritt eines weiteren Ausführungsbeispiels dargestellt. Nach diesem Verfahren wird ein dreidimensionales Formteil aus einem Verbundmaterial 4 hergestellt. Dazu wird ein plattenförmiges Halbzeug auf eine Positivform gelegt. Die Positivform hat eine horizontale Auflagefläche 33, auf welche ein Strang 12 aus einem thermoplastischen, fließfähigen Kunststoffmaterial 6 aufgelegt wird. Der Strang 12 weist ebenfalls einen Hohlraum 43 auf, der mit Druckmittel gefüllt sein kann. Die Negativform 24 ist so weit geöffnet, dass das Verbundmaterial 4 und das thermoplastische Kunststoffmaterial 6 eingelegt werden können.
In Fig. 8b ist der Schließvorgang der Negativform dargestellt, welche sich über die Positivform stülpt. Das Verbundmaterial passt sich der Formgeometrie an und wird durch die schrägen Seitenflächen 34 der Negativform 24 nicht nur positioniert, sondern auch leicht gestreckt, sodass es nicht zu Buckeln oder Materialanhäufungen kommt, wodurch einzelne Teilbereiche des Verbundmaterials Schaden erleiden können. Der Abstand der beiden Formhälften entspricht im Bereich der zentralen Auflage des Verbundmaterials 35 der Summe aus der gewünschten Dicke des Verbundmaterials und der Differenz der gewünschten Dicke des thermoplastischen Kunststoffmaterials und der ursprünglichen Dicke des Verbundmaterials. Diese Differenz wird Null, wenn die beiden Dicken identisch sein sollen. Der Abstand des Aufnahmebereichs in der Positivform 28 vom Aufnahmebereich 29 in der Negativform vermindert sich gegenüber dem Abstand der beiden Formhälften im Bereich der zentralen Auflage um die Dicke des Verbundmaterials abzüglich der gewünschten Wandstärke des thermoplastischen Kunststoffmaterials. In dem vorliegenden Ausführungsbeispiel ist eine geringere Dicke des thermoplastischen Kunststoffmaterials vorgesehen. Zudem wird ein fließender Übergang der Dicke des Verbundmaterials zu der Dicke des thermoplastischen Kunststoffmaterials vorgesehen. Dazu hat die Positivform einen Endabschnitt 26, welcher einen von dem Wandabschnitt 36 abweichenden Neigungswinkel aufweist. Im dargestellten Beispiel ist daher ein geringerer Neigungswinkel des Endabschnitts 26 dargestellt.
In Fig. 8c ist dann der Endzustand erreicht. Durch die erhöhte Verpressung des Endabschnitts 26 wird einerseits verhindert, dass das thermoplastische Kunststoffmaterial 6 sich zwischen die beiden Deckschichten in die Strukturschicht einlagert. Wie im ersten Ausführungsbeispiel können an den beiden Formhälften Rippen oder Vorsprünge angebracht werden, die eine lokale Einschnürung des Verbundmaterials 4 bewirken und somit eine weitere Barriere für die Ausdehnung des thermoplastischen Kunststoffmaterials 6 darstellen.
Der letzte Verfahrensschritt der Öffnung der beiden Formhälften ist nicht dargestellt. Zusätzlich können in dem Bereich des thermoplastischen Kunststoffmaterials 6 im Auflagebereich in der Positivform oder im Aufnahmebereich der Negativform Heizvorrichtungen vorgesehen sein, wodurch eine Fließfähigkeit des Kunststoffmaterials schon bei geringeren Pressdrücken erreicht wird. Je nach gewünschter Dicke des thermoplastischen Kunststoffmaterials 6, welches den Rahmen oder die Abschlussbereiche des Verbundmaterials bildet, mit welchem das Verbundmaterial mit andere Bauteilen verbunden wird, wird der benötigte Innendruck allein durch die Wahl der Formtoleranzen oder nur durch Kombination der Formtoleranzen mit einer Erwärmung des thermoplastischen Kunststoffmaterials 6 erreicht.

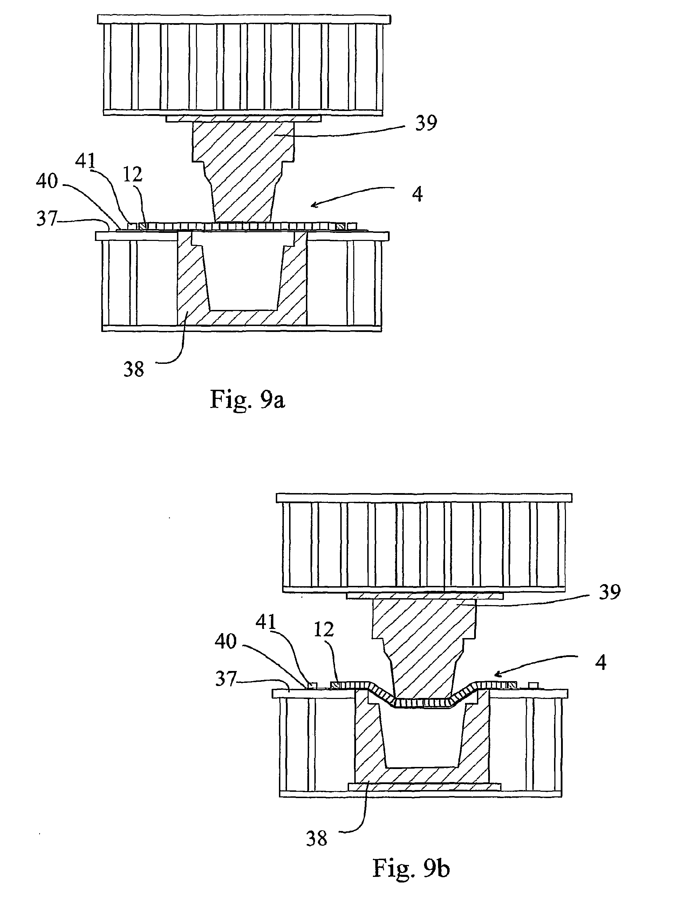

In Fig. 9a wird der erste Verfahrensschritt eines weiteren Ausführungsbeispiels der Erfindung dargestellt. Nach diesem Verfahren wird ein dreidimensionales Formteil aus einem Verbundmaterial 4 hergestellt. Dazu wird ein plattenförmiges Halbzeug auf eine Negativform 38 gelegt. Die Negativform hat eine horizontale Auflagefläche 37, auf welche ein Strang 12 aus einem thermoplastischen, fließfähigen Kunststoffmaterial aufgelegt wird. Die Positivform 39 ist so weit geöffnet, dass das Verbundmaterial 4 und das thermoplastische Kunststoffmaterial 12 eingelegt werden können.
Zwischen der Negativform 38 und dem Verbundmaterial 4 ist eine Schicht 40 aufgespannt, welche verhindert, dass das Verbundmaterial unkontrolliert in die Öffnung der Negativform fällt. Diese Schicht 40 besteht aus elastischem Material, welches sich unter Ausübung der Pressdrücke nicht mit dem Verbundmaterial verbindet. Dazu ist sie entweder mit haftungsabweisenden Substanzen beschichtet oder lässt sich wie eine Folie abziehen. Wenn die Schicht 40 aus elastischem Material gefertigt ist, und sich nicht mit Verbundmaterial oder thermoplastischem Kunststoffmaterial verbindet, kann dieselbe Schicht für eine Anzahl von Presszyklen verwendet werden. In einer anderen Ausführungsart wird die Schicht 40 zwar mit Spannvorrichtungen 41 vorgespannt, allerdings werden die Spannvorrichtungen auf eine begrenzte Zugspannung voreingestellt. Wenn die Zuspannung in der Schicht den voreingestellten Wert übersteigt, wird die Schicht 41 nachgeführt. Insbesondere bei tiefen Bauteilen oder scharfen Kanten der Formteile wird die Schicht dann nicht überdehnt.
In Fig. 9b ist eine erste Phase des Schließvorgangs der Positivform 39 durch Annäherung an die Negativform 38 dargestellt. Das Verbundmaterial 4 passt sich der Formgeometrie der Positivform 39 an und wird durch die Schicht 40 korrekt positioniert.

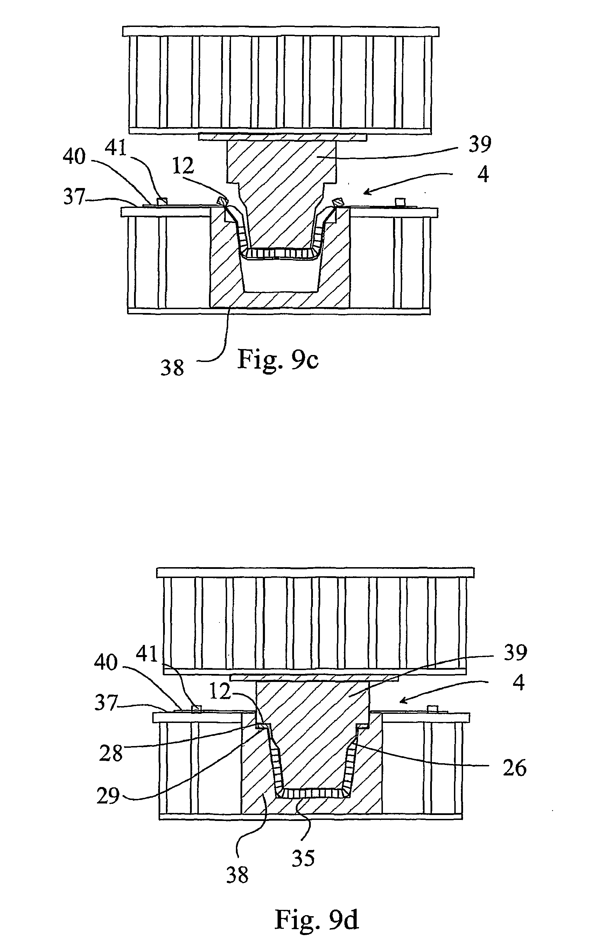

In Fig. 9c ist eine zweite Phase des Schließvorgangs der Positivform 39 durch Annäherung an die Negativform 38 dargestellt. Das Verbundmaterial 4 passt sich der Formgeometrie der Positivform weiter 39 an und wird durch die Schicht 40 und die Wand der Negativform 38 genau positioniert. Der Strang 12 des thermoplastischen Kunststoffmaterials wird mit dem Verbundmaterial mit verschoben und in den Zwischenraum zwischen Positivform und Negativform aufgenommen.
In Fig. 9d ist dann der Endzustand erreicht. Durch die erhöhte Verpressung des Endabschnitts 26 wird einerseits verhindert, dass das thermoplastische Kunststoffmaterial sich zwischen die beiden Deckschichten in die Strukturschicht einlagert. Wie im ersten und zweiten Ausführungsbeispiel können an die beiden Formhälften Rippen oder Vorsprünge angebracht werden, die eine lokale Einschnürung des Verbundmaterials bewirken und somit eine weitere Barriere für die Ausdehnung des thermoplastischen Kunststoffmaterials darstellen.
Der Abstand der beiden Formhälften entspricht im Bereich der zentralen Auflage des Verbundmaterials 35 der Summe aus der gewünschten Dicke des Verbundmaterials und der Differenz der gewünschten Dicke des thermoplastischen Kunststoffmaterials und der ursprünglichen Dicke des Verbundmaterials. Diese Differenz wird Null, wenn die beiden Dicken identisch sein sollen. Der Abstand des Aufnahmebereichs in der Positivform 28 vom Aufnahmebereich 29 in der Negativform vermindert sich gegenüber dem Abstand der beiden Formhälften im Bereich der zentralen Auflage um die Dicke des Verbundmaterials abzüglich der gewünschten Wandstärke des thermoplastischen Kunststoffmaterials. In dem vorliegenden Ausführungsbeispiel ist eine geringere Dicke des thermoplastischen Kunststoffmaterials vorgesehen. Zudem wird ein fließender Übergang der Dicke des Verbundmaterials zu der Dicke des thermoplastischen Kunststoffmaterials vorgesehen. Dazu hat die Positivform einen Endabschnitt 26, welcher einen von dem Wandabschnitt 36 abweichenden Neigungswinkel aufweist. Im dargestellten Beispiel ist daher ein geringerer Neigungswinkel des Endabschnitts 26 dargestellt
Der letzte Verfahrensschritt der Öffnung der beiden Formhälften ist nicht dargestellt. Zusätzlich können in dem Bereich des thermoplastischen Kunststoffmaterials im Auflagebereich in der Positivform oder im Aufnahmebereich der Negativform Heizvorrichtungen vorgesehen sein, wodurch eine Fließfähigkeit des Kunststoffmaterials schon bei geringeren Pressdrücken erreicht wird. Je nach gewünschter Dicke des thermoplastischen Kunststoffmaterials, welches den Rahmen oder die Abschlussbereiche des Verbundmaterials bildet, mit welchem das Verbundmaterial mit andere Bauteilen verbunden wird, wird der benötigte Innendruck allein durch die Wahl der Formtoleranzen oder nur durch Kombination der Formtoleranzen mit einer Erwärmung des thermoplastischen Kunststoffmaterials erreicht.

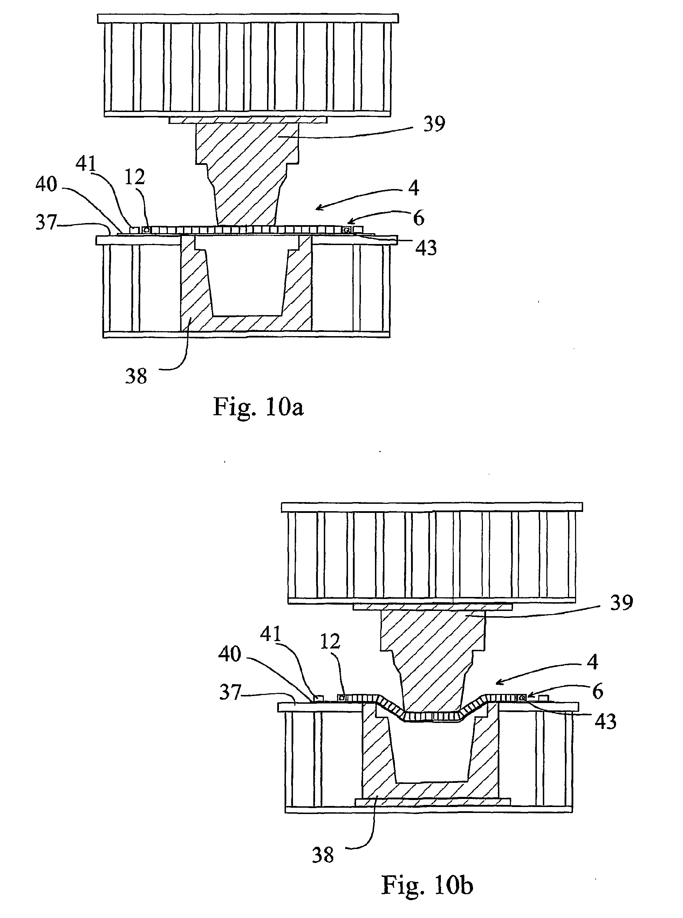

In Fig. 10a wird der erste Verfahrensschritt eines weiteren Ausführungsbeispiels dargestellt. Nach diesem Verfahren wird ein dreidimensionales Formteil aus einem Verbundmaterial 4 hergestellt. Dazu wird ein plattenförmiges Halbzeug auf eine Negativform 38 gelegt. Die Negativform hat eine horizontale Auflagefläche 37, auf welche ein Strang 12 aus einem thermoplastischen, fließfähigen Kunststoffmaterial aufgelegt wird. Der Strang 12 weist ebenfalls einen Hohlraum 43 auf, der mit Druckmittel gefüllt sein kann. Die Positivform 39 ist so weit geöffnet, dass das Verbundmaterial 4 und das thermoplastische Kunststoffmaterial 12 eingelegt werden können.
Zwischen der Negativform 38 und dem Verbundmaterial 4 ist eine Schicht 40 aufgespannt, welche verhindert, dass das Verbundmaterial unkontrolliert in die Öffnung der Negativform fällt. Diese Schicht 40 besteht aus elastischem Material, welches sich unter Ausübung der Pressdrücke nicht mit dem Verbundmaterial verbindet. Dazu ist sie entweder mit haftungsabweisenden Substanzen beschichtet oder lässt sich wie eine Folie abziehen. Wenn die Schicht 40 aus elastischem Material gefertigt ist, und nicht am Verbundmaterial oder thermoplastischen Kunststoffmaterial verbindet, kann dieselbe Schicht für eine Anzahl von Presszyklen verwendet werden. In einer anderen Ausführungsart wird die Schicht 40 zwar mit Spannvorrichtungen 41 vorgespannt, allerdings werden die Spannvorrichtungen auf eine begrenzte Zugspannung voreingestellt. Wenn die Zuspannung in der Schicht den voreingestellten Wert übersteigt, wird die Schicht 41 nachgeführt. Insbesondere bei tiefen Bauteilen oder scharfen Kanten der Formteile wird die Schicht dann nicht überdehnt.

In Fig. 10b ist eine erste Phase des Schließvorgangs der Positivform 39 durch Annäherung an die Negativform 38 dargestellt. Das Verbundmaterial 4 passt sich der Formgeometrie der Positivform 39 an und wird durch die Schicht 40 korrekt positioniert.

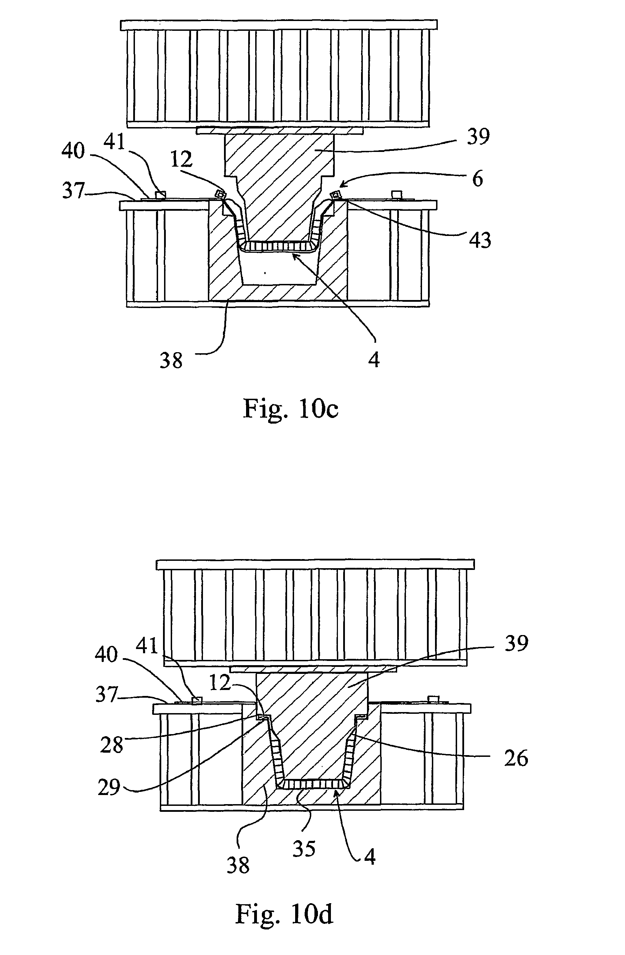

In Fig. 10c ist eine zweite Phase des Schließvorgangs der Positivform 39 durch Annäherung an die Negativform 38 dargestellt. Das Verbundmaterial 4 passt sich der Formgeometrie der Positivform weiter 39 an und wird durch die Schicht 40 und die Wand der Negativform 38 genau positioniert. Der Strang 12 des thermoplastischen Kunststoffmaterials wird mit dem Verbundmaterial mit verschoben und in den Zwischenraum zwischen Positivform und Negativform aufgenommen.
In Fig. 10d ist dann der Endzustand erreicht. Durch die erhöhte Verpressung des Endabschnitts 26 wird einerseits verhindert, dass das thermoplastische Kunststoffmaterial sich zwischen die beiden Deckschichten in die Strukturschicht einlagert. Wie im ersten und zweiten Ausführungsbeispiel können an die beiden Formhälften Rippen oder Vorsprünge angebracht werden, die eine lokale Einschnürung des Verbundmaterials bewirken und somit eine weitere Barriere für die Ausdehnung des thermoplastischen Kunststoffmaterials darstellen.
Der Abstand der beiden Formhälften entspricht im Bereich der zentralen Auflage des Verbundmaterials 35 der Summe aus der gewünschten Dicke des Verbundmaterials und der Differenz der gewünschten Dicke des thermoplastischen Kunststoffmaterials und der ursprünglichen Dicke des Verbundmaterials. Diese Differenz wird Null, wenn die beiden Dicken identisch sein sollen. Der Abstand des Aufnahmebereichs in der Positivform 28 vom Aufnahmebereich 29 in der Negativform vermindert sich gegenüber dem Abstand der beiden Formhälften im Bereich der zentralen Auflage um die Dicke des Verbundmaterials abzüglich der gewünschten Wandstärke des thermoplastischen Kunststoffmaterials. In dem vorliegenden Ausführungsbeispiel ist eine geringere Dicke des thermoplastischen Kunststoffmaterials vorgesehen. Zudem wird ein fließender Übergang der Dicke des Verbundmaterials zu der Dicke des thermoplastischen Kunststoffmaterials 6 vorgesehen. Dazu hat die Positivform einen Endabschnitt 26, welcher einen von dem Wandabschnitt 36 abweichenden Neigungswinkel aufweist. Im dargestellten Beispiel ist daher ein geringerer Neigungswinkel des Endabschnitts 26 dargestellt.
Der letzte Verfahrensschritt der Öffnung der beiden Formhälften ist nicht dargestellt. Zusätzlich können in dem Bereich des thermoplastischen Kunststoffmaterials im Auflagebereich in der Positivform oder im Aufnahmebereich der Negativform Heizvorrichtungen vorgesehen sein, wodurch eine Fließfähigkeit des Kunststoffmaterials schon bei geringeren Pressdrücken erreicht wird. Je nach gewünschter Dicke des thermoplastischen Kunststoffmaterials, welches den Rahmen oder die Abschlussbereiche des Verbundmaterials bildet, mit welchem das Verbundmaterial mit anderen Bauteilen verbunden wird, wird der benötigte Innendruck allein durch die Wahl der Formtoleranzen oder nur durch Kombination der Formtoleranzen mit einer Erwärmung des thermoplastischen Kunststoffmaterials erreicht.

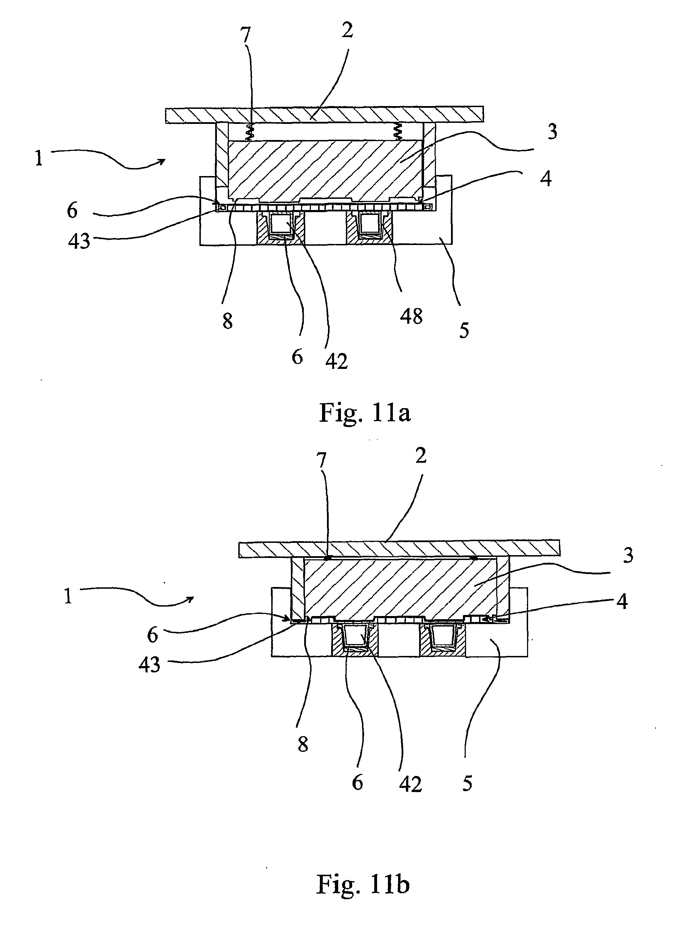

In Fig. 11a und Fig. 11b ist ein weiteres Ausführungsbeispiel für die Kombination von Verbundmaterial 4 mit einem thermoplastischen Kunststoffmaterial 6 dargestellt. In Fig. 11a wird der erste Schritt zur Herstellung eines Bauteils aus mittels des aus den nachfolgenden Schritten bestehenden Verfahrens dargestellt. Dazu wird ein mehrschichtiges Verbundmaterial 4 in eine Pressform 5 eingelegt. In den Randbereichen des Verbundmaterials 4 wird zumindest abschnittsweise ein thermoplastisches Kunststoffmaterial 6 als Strang oder Wulst gelegt. Dieser Strang oder Wulst kann wie in den vorherigen Ausführungsbeispielen mindestens einen Hohlraum 43 aufweisen. Zusätzlich wird an das Verbundmaterial 4 ein Hohlprofil 42 angebracht. Auch dieses Hohlprofil liegt auf einer Schicht aus thermoplastischem, fließfähigen Kunststoffmaterial 6.
Der Querschnitt des thermoplastischen Kunststoffmaterials 6 ist an sich unerheblich, solange sich das den Querschnitt bildende Kunststoffmaterial in dem Zwischenraum zwischen Formwand 29 und dem Rand 30 des Verbundmaterials unter Druck so verteilen kann, dass es eine Dicke von mindestens 2 mm aufweist. Das Verbundmaterial weist ungefähr eine Dicke von 5 mm auf.
Dann wird nach der Darstellung in Fig. 11a ein mehrteiliger Stempel abgesenkt. Dieser Stempel besteht aus mindestens einem Hochdruckstempel 2 und einem Niederdruckstempel 3. Die Hochdruckstempel und Niederdruckstempel können durch Federelemente 7 miteinander gekoppelt sein, wie in diesem Ausführungsbeispiel dargestellt ist. In Fig. 11a ist das Federelement nur gering belastet. Sobald der Niederdruckstempel 2 auf die Oberfläche des Verbundmaterials auftrifft, wird das Federelement belastet. Der Niederdruckstempel kann einen oder mehrere Vorsprünge 8 aufweisen, die unter Zunahme der Federkraft den Bereich 31 des Verbundmaterials plastisch verformen, welcher unter dem Vorsprung liegt. Dabei wird im wesentlichen die Hohlraumstruktur der Kernschicht (zu dem Aufbau des Verbundmaterials siehe Fig. 2a, Fig. 2b, Fig. 4a, Fig. 4b, Fig. 6) zerstört, welche einer derartigen lokalen Belastung nicht stand hält.

Gleichzeitig werden die Hochdruckstempel weiter in Richtung des thermoplastischen Kunststoffmaterials 6 - also in der Zeichnung nach unten -verschoben, bis sie mit dem thermoplastischen Kunststoffmaterial 6 in Kontakt kommen. Gleichzeitig wird das Hohlprofil mit einem Druckgas beaufschlagt, sodass das Hohlprofil unter dem Druck nicht knickt.
In Fig. 11 b ist dargestellt, wie das thermoplastische Kunststoffmaterial 6 den zur Verfügung stehenden Querschnitt ausfüllt. Um einen festen Verbund zwischen dem Verbundmaterial 4 und dem thermoplastischen Kunststoffmaterial 6 zu erreichen, kann es vorteilhaft sein, den Hochdruckstempel soweit abzusenken, dass die Struktur der Kernschicht im Randbereich zerstört wird. Durch den Druck von bis zu 250 bar dringt das fließfähige thermoplastische Kunststoffmaterial in die Kernschicht ein und kann auch die Randbereiche der Deckschichten oder Mantelschichten 32 des Verbundmaterials umhüllen. In gleicher Weise umhüllt das fließende Kunststoffmaterial 6 das Hohlprofil. Wenn die Deckschichten des Verbundmaterials ebenfalls aus einem faserverstärkten, fließfähigen Kunststoff ausgebildet sind, beginnen auch die Mantelschichten selbst zu fließen und so einen homogenen Übergang von thermoplastischem Kunststoffmaterial und Verbundmaterial auszubilden.
Neben rechteckigen oder quadratischen oder rautenförmigen Profilen können in gleicher Weise Rohrprofile oder andere Hohlprofile als Bereich mit vergrößertem Querschnitt 48 vorgesehen werden. Ein derartiger Bereich vergrößerten Querschnitts 48 kann folglich aus jeder beliebigen Sequenz von geraden und gekrümmten Linien bestehen, wobei die gesamte Sequenz von geraden und gekrümmten Linien eine geschlossene Querschnittsfläche ausbildet.

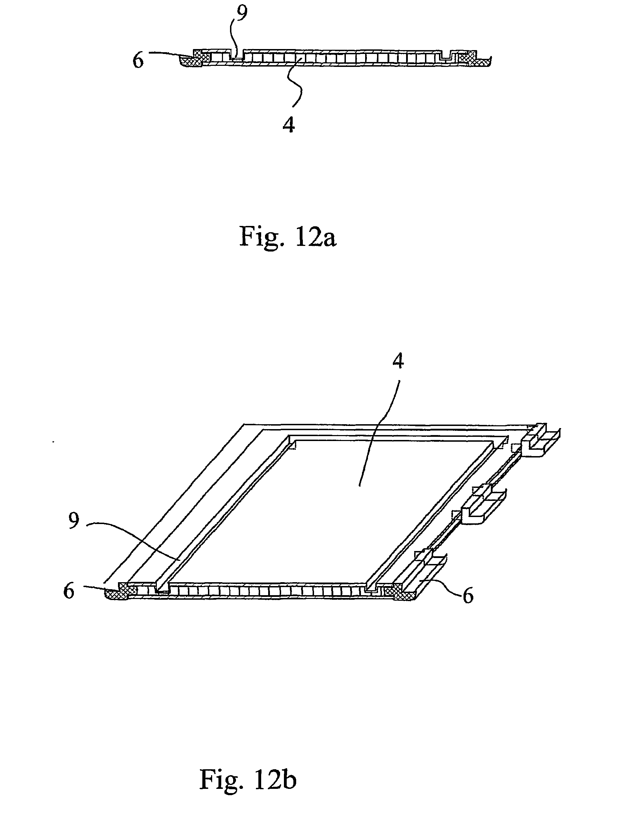

Fig. 12a und Fig. 12b zeigen die Möglichkeit einer Anbringung von Verbindungselementen oder Halteelementen aus fließfähigem thermoplastischen Kunststoff 6 in bestimmten Abschnitten.

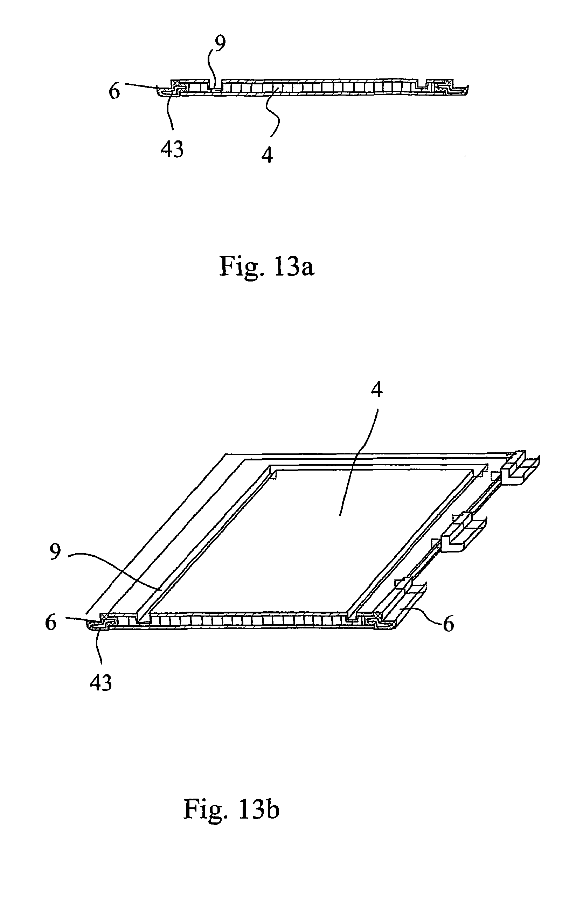

Fig. 13a und Fig. 13b zeigen die Möglichkeit einer Anbringung von Verbindungselementen in bestimmten Abschnitten des Umfangsbereichs des Verbundmaterials oder von Halteelementen aus fließfähigem thermoplastischen Kunststoff 6. Das thermoplastische Kunststoffmaterial kann wiederum aus einem Wulstmaterial oder Strang bestehen, in welchem ein druckmittelgefüllter Hohlraum 43 angebracht ist.

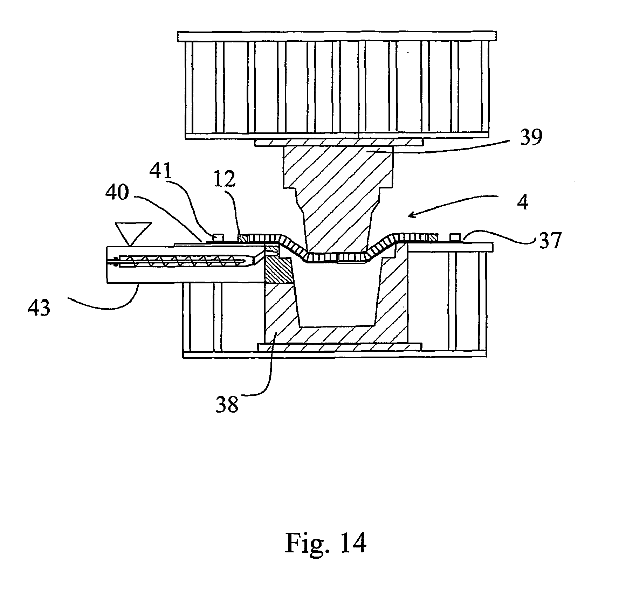

Fig. 14 zeigt die Möglichkeit, anstatt einer Hochdruckpresse eine Spritzgießeinheit 51 einzusetzen. Wenn es sich um ein großflächiges Formteil handelt, können auch mehrere derartige Einheiten vorgesehen werden.

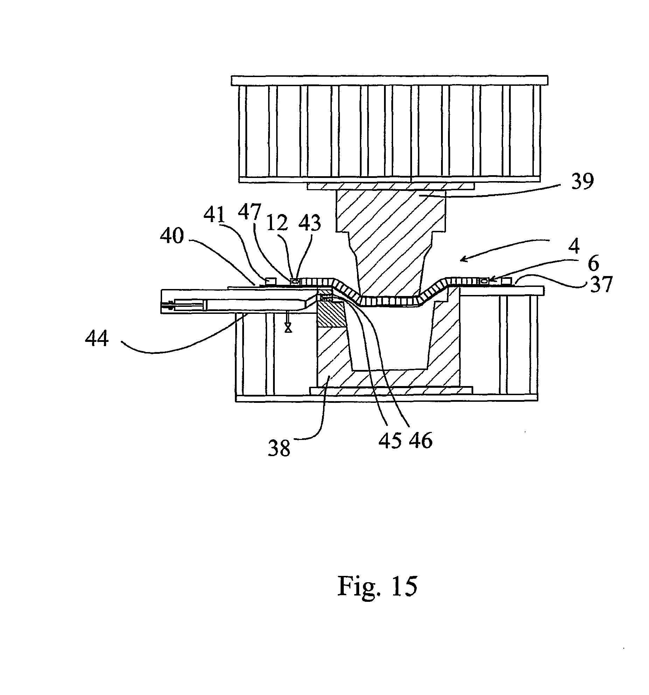

Fig. 15 zeigt eine mögliche Anordnung einer Zuleitung 44 für das Druckmittel, wenn der oder die Hohlräume (42,43) nicht schon mit Druckmittel befüllt sind. Die Zuleitung weist eine Druckmittelleitung auf, die in der Figur nur angedeutet ist und eine Kolbenvorrichtung zur Verdichtung und zum Ausschub des Druckmittels. Die Zuleitung ist so angeordnet, dass sie im wesentlichen auf gleicher Höhe wie die mittlere Achse des Hohlraums (42, 43). Wenn der Hohlraum eine seitliche Öffnung 47 aufweist, kommt diese beim Einlegen auf ein Dichtelement 46 zu liegen, das den Abschluss der Zuleitung 44 bildet. Sobald der Hochdruckstempel 2 mit der Verpressung des thermoplastischen Kunststoffmaterials 6 beginnt, dichtet das Dichtelement 46 und Druckmittel kann in den Hohlraum eingeleitet werden.
Wenn der Hohlraum 42, 43 keine Öffnung nach außen aufweist, ist in dem Endbereich der Zuleitung 44 eine Stichvorrichtung 45 vorgesehen, welche sich bei Beaufschlagung mit Druckmittel in das thermoplastische Kunststoffmaterial 6 verschiebt und dessen Wand dabei durchsticht und somit einen Verbindungsweg für das Druckmittel in das den Hohlraum ausbildende Innere des thermoplastischen Kunststoffmaterials freigibt.

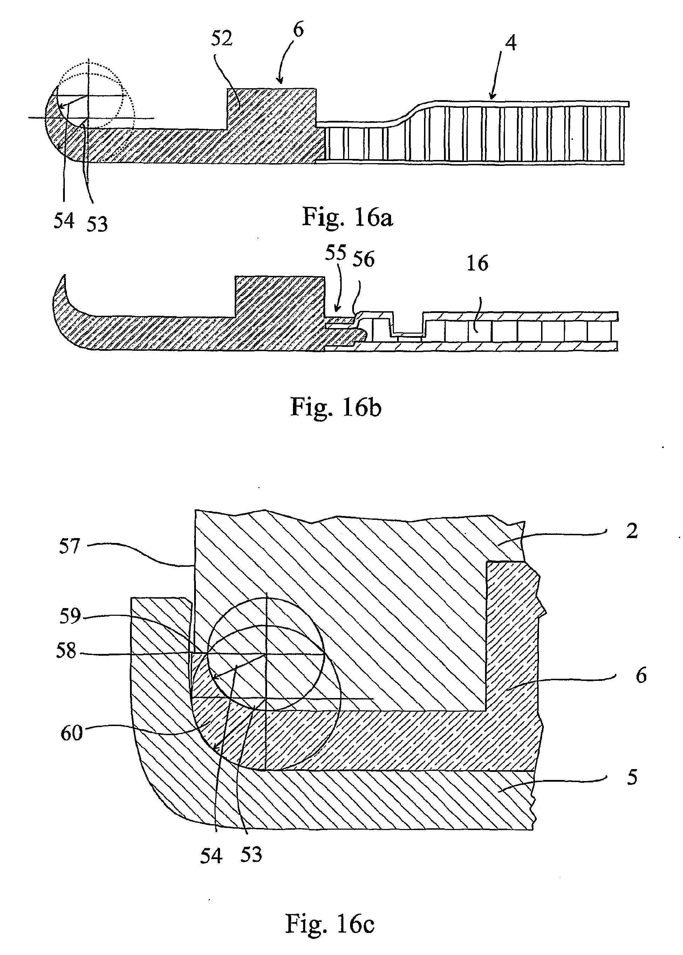

Fig. 16a zeigt Details des Übergangs von thermoplastischem Kunststoffmaterial 6 zu Verbundmaterial 4. Durch die Verwendung des Fließpressverfahren ist es möglich, thermoplastisches Kunststoffmaterial mit unterschiedlicher Wandstärke herzustellen, wobei das thermoplastische Material mindestens einen Bordbereich 52 vergrößerten Querschnitts aufweist. Mit dem Verfahren ist es möglich, saubere Bordbereiche ohne nachträgliches Beschneiden herzustellen, wobei der Bordbereich scharfe Kanten aufweist, welche Radien aufweisen. In einer vorteilhaften Ausführung übersteigt der Radius 53 der Aussenkante den Radius 54 der Innenkante. Somit können sowohl das Presswerkzeug als auch der Stempel mit relativ großen Radien gefertigt werden. Die Kante im Schnittpunkt des Außenradius und des Innenradius läuft zu einem genau definierten Randbereich aus. Mit dieser Maßnahme wird vermieden, dass es zu Schnittabfällen beim Pressvorgang kommt. Daher befindet sich außerhalb des Randbereichs kein Kunststoffmaterial.
Fig. 16b zeigt ein weiteres vorteilhaftes Ausführungsbeispiel für die Gestaltung der Kanten des thermoplastischen Kunststoffmaterials. In diesem Ausführungsbeispiel fließt das thermoplastische Kunststoffmaterial im Übergangsbereich 55 zu dem Verbundmaterial weiter in die Struktur des Verbundmaterials. Das Fliessen kann durch einen Vorsprung 56 begrenzt werden. Der Vorsprung 56 tritt automatisch auf, wenn der Randbereich des Verbundmaterials mit dem Hochdruckstempel verpresst wird. Die Kernschicht 16 wird zumindest teilweise zerstört. Im Übergangsbereich 55 lagert sich thermoplastisches Material in die Kernschicht ein und durch den Druck des Hochdruckstempels kommt es in den Randbereichen der Verstärkungsschichten (17, 18) ebenfalls zu einem Anschmelzen des Materials. Dadurch verbessert sich die Haftung des thermoplastischen Kunststoffmaterials mit dem Verbundmaterial und eine lokale Schwächung durch die Zerstörung der Struktur der Kemschicht wird durch das thermoplastische Kunststoffmaterial kompensiert.
Fig. 16c zeigt ein Detail der Ausbildung der Kante zwischen Pressform 5 und Hochdruckstempel 2. Die Pressform weist dabei in ihrem Randbereich den Radius der Aussenkante 53 auf. Der Hochdruckstempel weist den Radius der Innenkante 54 auf. Durch die Wahl der Radien kann auf die Gestaltung des Randbereichs Einfluss genommen werden. Der Abstand zwischen Hochdruckstempelwand 57 und der Wand der Pressform 58 ist dabei so gewählt, dass es entweder zur Ausbildung einer scharfen Kante kommt, wie in Fig. 16a oder Fig. 16b dargestellt wurde, oder auch ein Absatz 59 vorgesehen werden kann, um eine stumpfe Kante zu erzeugen. Somit sind der Auswahl der geometrischen Abmessungen des Kantenbereichs 60 des thermoplastischen Kunststoffmaterials keine Grenzen gesetzt. Der Abstand zwischen der Hochdruckstempelwand 57 und der Wand der Pressform 58 beträgt dabei nicht mehr als 0,1 mm.

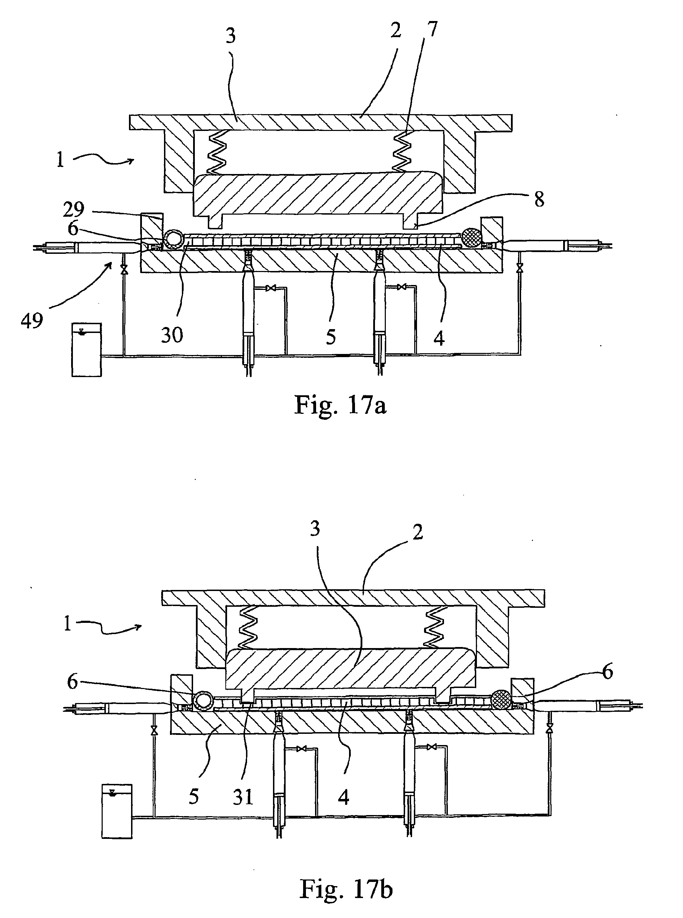

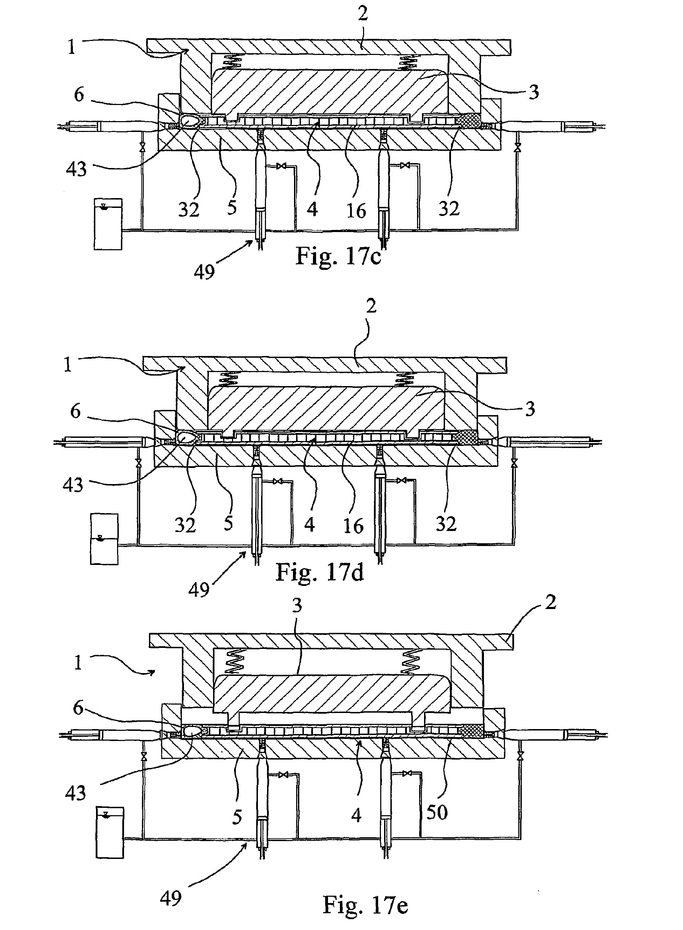

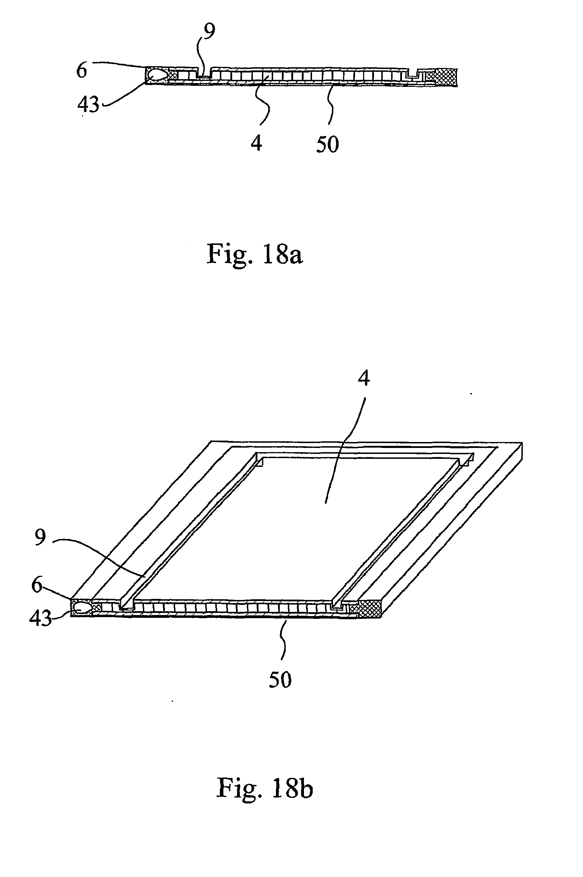

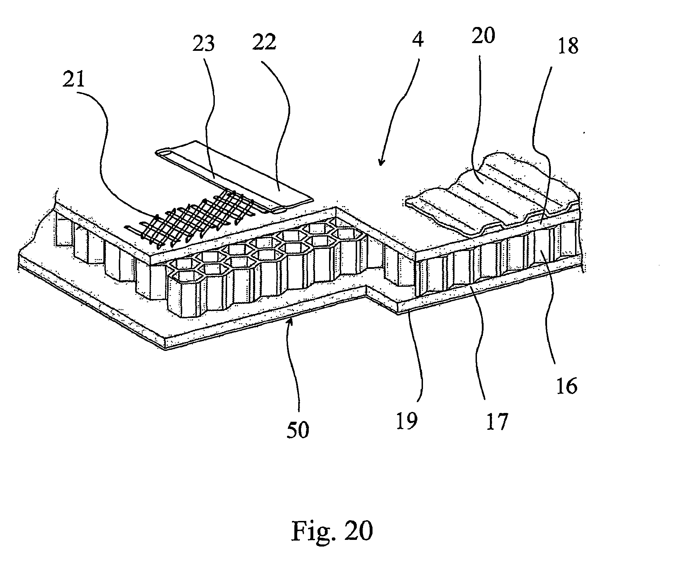

In Fig. 17a wird der erste Schritt zur Herstellung eines Formteils mit integrierter Dekorschicht dargestellt. Dazu wird ein mehrschichtiges Verbundmaterial 4 in eine Pressform 5 eingelegt. In den Randbereichen des Verbundmaterials 4 wird zumindest abschnittsweise ein thermoplastisches Kunststoffmaterial 6 als Strang oder Wulst gelegt. Das thermoplastische Kunststoffmaterial 6 kann mindestens einen Hohlraum 43 aufweisen, welcher mit einem Druckmittel gefüllt ist. Das den Querschnitt bildende thermoplastische Kunststoffmaterial verteilt sich in dem Zwischenraum zwischen Formwand 29 und dem Rand 30 des Verbundmaterials unter Druck derart, dass es eine Dicke von mindestens 2 mm aufweist. Das Verbundmaterial weist ungefähr eine Dicke von 5 mm auf.
Dann wird nach der Darstellung in Fig. 17b ein mehrteiliger Stempel abgesenkt. Dieser Stempel besteht aus mindestens einem Hochdruckstempel 2 und einem Niederdruckstempel 3. Die Hochdruckstempel und Niederdruckstempel können durch Federelemente 7 miteinander gekoppelt sein, wie in diesem Ausführungsbeispiel dargestellt wird. In Fig. 17b ist das Federelement entlastet. Sobald der Niederdruckstempel 2 auf die Oberfläche des Verbundmaterials auftrifft, wird das Federelement belastet. Der Niederdruckstempel kann einen oder mehrere Vorsprünge 8 aufweisen, die mit Zunahme der Federkraft den Bereich 31 des Verbundmaterials plastisch verformen, welcher unter dem Vorsprung liegt. Dabei wird im wesentlichen die Hohlraumstruktur der Kernschicht (zum Aufbau des Verbundmaterials siehe Fig. 18a, Fig. 18b, Fig. 20) zerstört, welche einer derartigen lokalen Belastung nicht stand hält.
Gleichzeitig werden die Hochdruckstempel, von denen in Fig. 17b nur ein einziger dargestellt ist, weiter in Richtung des thermoplastischen Kunststoffmaterials - also in der Zeichnung nach unten -verschoben, bis sie mit dem thermoplastischen Kunststoffmaterial in Kontakt kommen.
In Fig. 17c ist dargestellt, wie das thermoplastische Kunststoffmaterial 6 den zur Verfügung stehenden Querschnitt ausfüllt. Um einen festen Verbund zwischen dem Verbundmaterial 4 und dem thermoplastischen Kunststoffmaterial 6 zu erreichen, kann es vorteilhaft sein, den Hochdruckstempel 2 soweit abzusenken, dass die Struktur der Kemschicht 16 im Randbereich zerstört wird. Durch den Druck von bis zu 250 bar dringt das fließfähige thermoplastische Kunststoffmaterial in die Kemschicht ein und kann auch die Randbereiche der Deckschichten oder Mantelschichten 32 des Verbundmaterials 4 umhüllen. Der Hohlraum 43 wird dabei in begrenztem Ausmaß mitverformt. Wenn das Innere des Hohlraums 43 selbst unter Druck steht, ist gewährleistet, dass die Wandstärke des thermoplastischen Kunststoffmaterials über den Hohlquerschnitt annähernd konstant ist. Wenn die Deckschichten des Verbundmaterials ebenfalls aus einem faserverstärkten, fließfähigen Kunststoff ausgebildet sind, beginnen auch die Randbereiche der Deckschichten oder Mantelschichten 32 selbst zu fließen und so einen homogenen Übergang von thermoplastischem Kunststoffmaterial 4 und Verbundmaterial 6 auszubilden. Das thermoplastische Kunststoffmaterial 4 füllt die Hohlräume bis zu dem vom Vorsprung 8 eingedrückten Bereich 31. Somit hat der Vorsprung 8 auch die Funktion, die unkontrollierte Ausbreitung des thermoplastischen Kunststoffmaterials 6 in die Kernschicht 16 zu unterbinden.

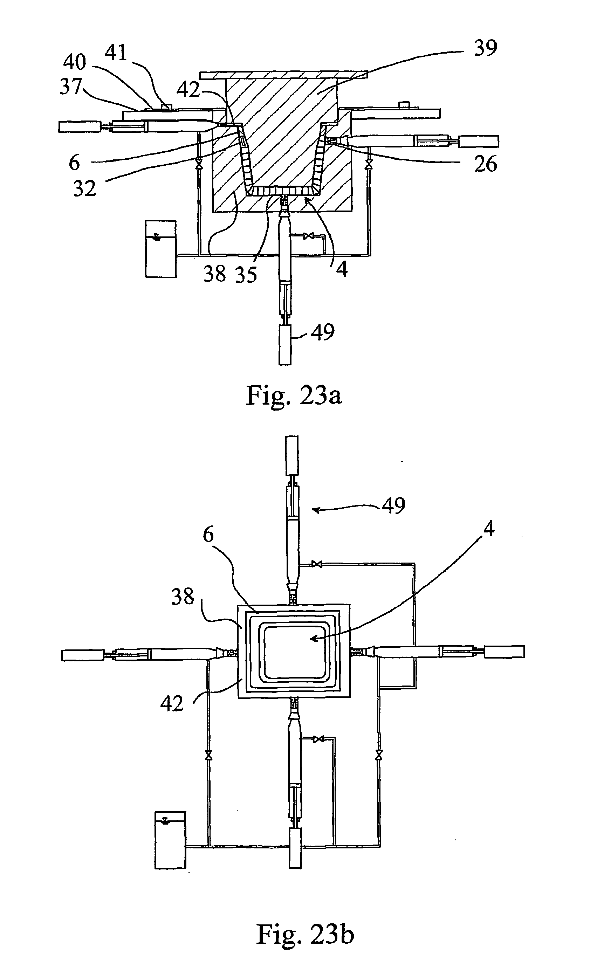

In Fig.17d ist dargestellt, wie ein Dekormaterial in einen durch geringfügiges Anheben der Hochdruckstempel 2 und des Niederdruckstempels 3 entstehenden Zwischenraum zwischen Verbundmaterial 4 bzw. thermoplastischem Kunststoffmaterial 4 und der Pressform 5 eingespritzt wird. Auf die Hochdruckstempel 2 wirkt nicht mehr der Maximaldruck der Presse, sodass der Zwischenraum gebildet wird. Durch den Gegendruck der Hochdruckstempel 2 und des Niederdruckstempels 3 wird aber verhindert, dass es durch den Einspritzdruck zu lokalen Verformungen des Formteils kommt. Die Einspritzvorrichtung 49 kann entweder ein punktförmiges Einspritzen ermöglichen, wobei beispielsweise eine Düse, wie sie in GB 1 475 478 A1 offenbart wird, zum Einsatz kommen kann, oder die Einspritzung über einen flächenförmigen Bereich erfolgt, wie in Fig. 23a oder Fig. 23b offenbart wird.

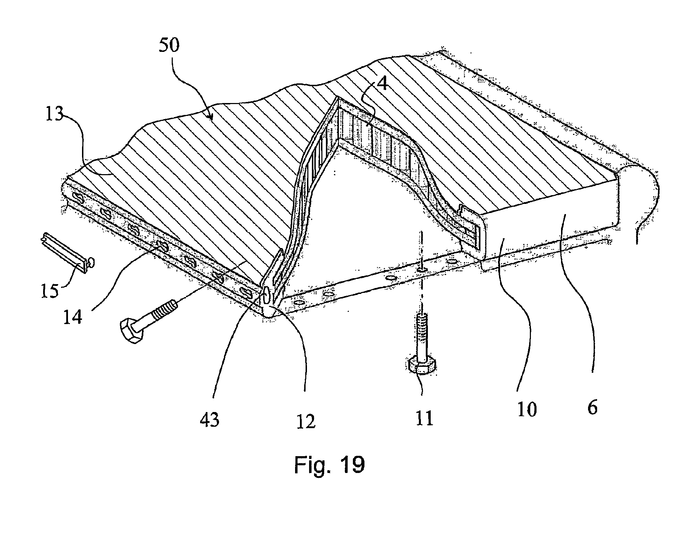

In Fig.17e der letzte Schritt des Fließpressverfahrens dargestellt. Die Hochdruckstempel 2 und Niederdruckstempel 3 werden in die Ausgangspositionen zurückgefahren und das fertige Formteil aus der Pressform entnommen (nicht dargestellt). Vor der Entnahme kann eine Abkühlung des Formteils vorgesehen werden, was insbesondere bei großflächigen Formteilen Verzugsproblemen, die auf thermischen Spannungen beruhen, zuvorkommt. Das thermoplastische Kunststoffmaterial und das Dekormaterial sollten genügend ausgehärtet sein, damit die Dekorschicht in jedem Bereich auf dem Verbundmaterial 4 oder dem thermoplastischen Kunststoffmaterial 6 haftet. Insbesondere, wenn in thermoplastischen Kunststoffmaterial Hohlräume vorhanden sind, wie in den Fig. 17a bis 17e linksseitig dargestellt wird, kann ein derartiger Hohlraum, der durch die Anbringung von Verbindungselementen, wie beispielsweise den in Fig. 19 dargestellten Verbindungsleisten 15, durchstoßen wird und noch unter innerem Druck steht, einem so erfolgenden Druckausgleich standhalten, ohne, dass es bei fertig ausgehärtetem thermoplastischen Material zu Schwindungserscheinungen kommt.

Das Verbundmaterial nach Fig. 18a, Fig. 18b und Fig. 20 wird aus Gründen der Gewichtsreduktion eingesetzt. Trotz der in der Kemschicht 16 vorhandenen Hohlräumen, Aussparungen oder Zellen ist es möglich, ein Leichtbauteil mit hoher Steifigkeit herzustellen. Die Werte für die Steifigkeit werden im wesentlichen durch die Materialeigenschaften der die Kemschicht begrenzenden Rand- oder Verstärkungsschichten bestimmt. Aus diesem Grund besteht das Verbundmaterial aus mindestens einer Schicht, die einen wesentlichen Anteil an Hohlräumen aufweist. Diese sogenannte Kernschicht 16 wird dann von Verstärkungsschichten 17 aus Kunststoffmaterial umgeben, wobei das Kunststoffmaterial zusätzlich faserverstärkt sein kann. Würde man einen mit Kunststoffmaterial vollständig gefüllten Querschnitt aus demselben Kunststoffmaterial mit Faserverstärkung oder aus mehreren Schichten fertigen, die keine Hohlräume enthalten beträgt der Gewichtsunterschied bis zu 40%. Da die von der Kemschicht eingenommenen mittleren Querschnittsabschnitte kaum zur Biegesteifigkeit beitragen, werden diese Querschnittsbereiche soweit möglich durch eine Schicht mit einer Struktur aus vielen Hohlräumen, Aussparungen oder Zellen ersetzt. Mit dieser Maßnahme wird die Biegesteifigkeit nur unwesentlich verringert, da die Randbereiche aus faserverstärktem Kunststoff die Hauptlast tragen. Allerdings ist die Stabilität gegenüber Druckkräften, welche auf die Oberfläche wirken, vermindert. Daher werden derartige Verbundbauteile unter möglichst geringem Druck bei einer Temperatur, bei welcher es zum Erweichen der Schichten kommt, in einem Pressverfahren hergestellt. Dieses Konzept ist nicht auf das Verbundmaterial des in Fig. 18a, Fig. 18b oder Fig. 20 dargestellten Bauteils begrenzt, sondern kann auch auf den Randbereich, welcher aus thermoplastischem Kunststoffmaterial besteht, ausgedehnt werden.
In einem ersten Ausführungsbeispiel das Verbundmaterial 4 eine Sandwichstruktur auf, welche vorzugsweise aus einem wabenförmigen Material 16 im Kernbereich besteht und mindestens je eine Verstärkungsschicht 17, 18 enthält.
Die Kemschicht 16 besteht beispielsweise aus Polypropylen und die Verstärkungsschichten 17,18 aus einem faserverstärkten Polypropylen.
In einer weiteren Ausgestaltung der Erfindung kann die Kemschicht 16 aus expandiertem Polypropylen oder aus einem Schaummaterial mit oder ohne Verstärkungsrippen bestehen. Die Verwendung eines geschäumten Kernmaterials erfüllt die Forderungen nach Leichtbauweise, bietet die Möglichkeit, je nach Schaumdichte verschiedenste Verhältnisse von Bauteilvolumen zu Bauteilgewicht zu realisieren und ermöglicht eine recyclinggerechte Materialauswahl, da die Kernschicht wie die Verstärkungsschichten fast ausschließlich aus Polypropylen hergestellt werden kann und somit ein Monomaterialkonzept realisiert werden kann.
Wenn ein Monomaterialkonzept nicht gewünscht wird, ist es auch möglich, verschiedenste Materialien mit unterschiedlichen Schmelzpunkten zu kombinieren. Da das Verfahren unter Druck arbeitet und es nicht zu einer wesentlichen Erwärmung der Schichten kommt bzw. eine Beheizung der Schichten zwar vorgesehen werden kann, aber für das Verfahren nicht überragenden Einfluss hat, bietet das Verfahren die Möglichkeit, verschiedenste Kunststoffmaterialien, oder auch Hybridbauteile (das heißt Kunststoff-Metall-Verbundbauteile) zu kombinieren, um Formteile herzustellen.
Zudem können Dekorschichten auf den Oberflächen der Verstärkungsteile vorgesehen werden. Die Beschichtung kann als Lack, als Film oder als Formhaut ausgebildet sein, die bei ausreichender Druckbeständigkeit zusammen mit dem Sandwichmaterial verpresst wird, andernfalls in einem nachträglichen Bearbeitungsschritt aufgetragen werden kann.

Die Verwendung von Dekorschichten, die eine Struktur aufweisen, erlaubt es, auch Stoffe, Vliese, Matten und andere Gewebestrukturen zu dekorativen Zwecken mit dem Sandwichmaterial zu verbinden. Es ist darauf zu achten, dass in den Bereichen, in denen der Hochdruckstempel wirkt, derartige Schichten nicht vorgesehen werden sollten, weil die Gefahr besteht, dass die Schichten durch den hohen Druck Schaden erleiden. Um diese Schädigungen zu vermeiden, kann auch vorgesehen werden, die Pressform selbst mit einer Struktur zu versehen, welche die Dekorschicht(en) aufnimmt. Diese Strukturen können auch abschnittsweise vorgesehen werden, um verschiedene Dekorschichten zu kombinieren. Dabei ist eine Trennlinie zwischen verschiedenen Dekorschichten ebenfalls durch einen Eintrag von Hochdruck entlang einer Linie herstellbar. Entlang dieser Linie fließt Kunststoffmaterial unter Druck in einen Kanal, welcher die Form der Trennlinie aufweist. Das fließfähige Kunststoffmaterial kann auch unter die Dekorschichten eingelegt werden, sodass der Fliessvorgang zwischen den Randbereichen der Dekorschichten und der Verstärkungsschicht statt findet.
Andere Deckschichten machen die Verformungsbewegungen mit, wie beispielsweise Vliese. Vliese haben eine unregelmäßige Faserstruktur, wobei die Fasern gegeneinander beweglich sind. Diese Beweglichkeit kann dazu genützt werden, die Vliesschicht mit dem Verbundmaterial mit zu verformen. Auch dreidimensionale Formteile lassen sich mit einer derartigen Vliesschicht herstellen.
Da eine Vliesschicht auch die Oberflächenrauhigkeit erhöht, ist es auch möglich, diese Schicht mit einer Lackschicht zu tränken oder mit einer Folie zu verkleben oder sogar in einem einzigen Arbeitsschritt eine Dekorschicht in der Form auf die Vliesschicht auf dem Verbundmaterial aufzuspritzen.
Fig. 19 zeigt mögliche Ausgestaltungen der Randbereiche aus thermoplastischem Kunststoffmaterial und die mögliche Anbringung von Verbindungselementen. Das Verbundmaterial 4 wird dabei von einem thermoplastischen Kunststoffmaterial 6 teilweise ummantelt. Auf dem thermoplastischen Kunststoffmaterial 6 kann ein Blech oder dergleichen als Ummantelung 10 vorgesehen werden. Die Ummantelung 10 kann auch, wie in der Fig. 19 linksseitig dargestellt wurde, als Metallaufsatz 13 auf die fließfähige Schicht ausgebildet sein. Ummantelungen 10 und fließfähige Schicht 12 werden in dem Presswerkzeug derart positioniert, dass der Hochdruckstempel 2 auf die Ummantelung wirkt. Durch den Anpressdruck wird das thermoplastische Kunststoffmaterial 6 in fließfähigen Zustand versetzt. Der im thermoplastischen Kunststoffmaterial 6 optional vorhandene Hohlraum 43 ist dabei mit Druckgas oder Druckflüssigkeit gefüllt. Wenn der Anpressdruck auf das hohle thermoplastische Kunststoffmaterial wirkt, wird das thermoplastische Kunststoffmaterial fließfähig und passt sich der gewünschten Form an.

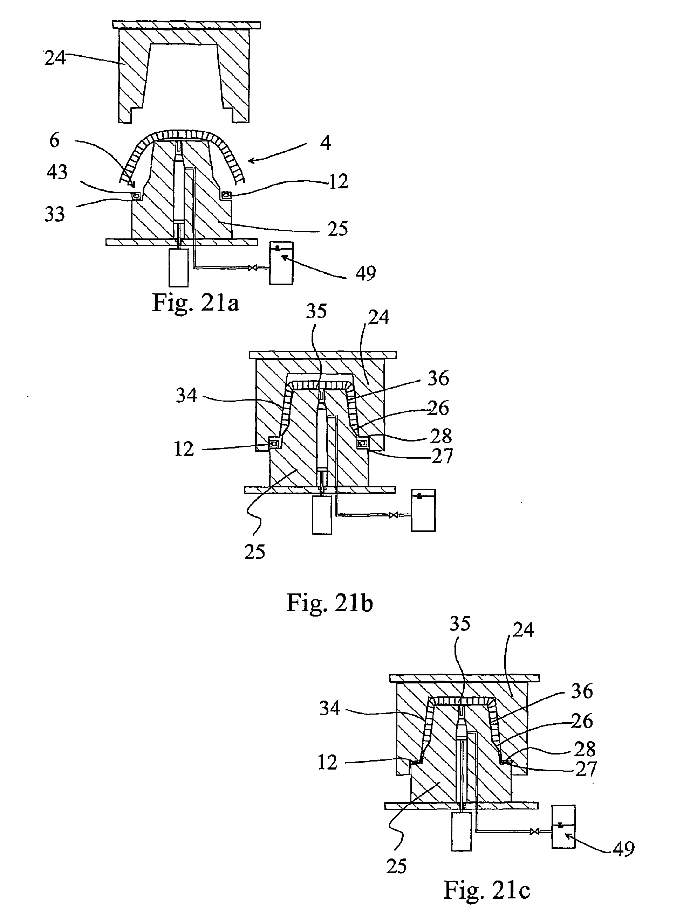

In Fig. 21a wird der erste Verfahrensschritt eines weiteren Ausführungsbeispiels dargestellt. Nach diesem Verfahren wird ein dreidimensionales Formteil aus einem Verbundmaterial 4 hergestellt. Dazu wird ein plattenförmiges Halbzeug auf eine Positivform gelegt. Die Positivform hat eine horizontale Auflagefläche 33, auf welche ein Strang 12 aus einem thermoplastischen, fließfähigen Kunststoffmaterial 6 aufgelegt wird. Der Strang 12 weist ebenfalls einen Hohlraum 43 auf, der mit Druckmittel gefüllt sein kann. Die Negativform 24 ist so weit geöffnet, dass das Verbundmaterial 4 und das thermoplastische Kunststoffmaterial 6 eingelegt werden können.
Eine Einspritzvorrichtung 49 ist vorgesehen, um ein Dekormaterial in das fertige Formteil einspritzen zu können. Die Einspritzvorrichtung ist Bestandteil der Positivform 25 aber durch ein Ventil im Sinn der GB 1 475 718 A geschlossen. Gleichartige Einspritzvorrichtungen können auch in der Negativform 24 vorgesehen werden, sie sind aus Gründen der Übersichtlichkeit nicht dargestellt. Daher ergibt sich auch, dass sowohl die konvexe, als auch die konkave Seite des aus dem Verbundmaterial 4 und dem thermoplastischen Kunststoffmaterial 6 bestehenden Formteils mit einem Dekormaterial 50 beschichtet werden, welches als Dekorschicht mindestens eine dekorative oder funktionale Schicht auf dem Formteil ausbildet.
In Fig. 21b ist der Schließvorgang der Negativform dargestellt, welche sich über die Positivform stülpt. Das Verbundmaterial passt sich der Formgeometrie an und wird durch die schrägen Seitenflächen 34 der Negativform 24 nicht nur positioniert, sondern auch leicht gestreckt, sodass es nicht zu Buckeln oder Materialanhäufungen kommt, wodurch einzelne Teilbereiche des Verbundmaterials Schaden erleiden können. Der Abstand der beiden Formhälften entspricht im Bereich der zentralen Auflage des Verbundmaterials 35 der Summe aus der gewünschten Dicke des Verbundmaterials und der Differenz der gewünschten Dicke des thermoplastischen Kunststoffmaterials und der ursprünglichen Dicke des Verbundmaterials. Diese Differenz wird Null, wenn die beiden Dicken identisch sein sollen. Der Abstand des Aufnahmebereichs in der Positivform 28 vom Aufnahmebereich 29 in der Negativform vermindert sich gegenüber dem Abstand der beiden Formhälften im Bereich der zentralen Auflage um die Dicke des Verbundmaterials abzüglich der gewünschten Wandstärke des thermoplastischen Kunststoffmaterials. In dem vorliegenden Ausführungsbeispiel ist eine geringere Dicke des thermoplastischen Kunststoffmaterials vorgesehen. Zudem wird ein fließender Übergang der Dicke des Verbundmaterials zu der Dicke des thermoplastischen Kunststoffmaterials vorgesehen. Dazu hat die Positivform einen Endabschnitt 26, welcher einen von dem Wandabschnitt 36 abweichenden Neigungswinkel aufweist. Im dargestellten Beispiel ist daher ein geringerer Neigungswinkel des Endabschnitts 26 dargestellt.
In Fig. 21c ist dann der Endzustand erreicht. Durch die erhöhte Verpressung des Endabschnitts 26 wird einerseits verhindert, dass das thermoplastische Kunststoffmaterial 6 sich zwischen die beiden Deckschichten in die Strukturschicht einlagert. Wie im ersten Ausführungsbeispiel können an den beiden Formhälften Rippen oder Vorsprünge angebracht werden, die eine lokale Einschnürung des Verbundmaterials 4 bewirken und somit eine weitere Barriere für die Ausdehnung des thermoplastischen Kunststoffmaterials 6 darstellen.
Des weiteren ist in Fig. 21 c dargestellt, wie eine Einspritzvorrichtung 49 angeordnet sein kann, um den Hohlraum mit Dekormaterial auszukleiden. Die Darstellung ist in keiner Weise auf die Einspritzung von Dekormaterial in den konkaven Bereich des Verbundmaterials 4 und des thermoplastischen Kunststoffmaterials 6 begrenzt, in gleicher Weise kann eine Einspritzvorrichtung in der Negativform 24 vorgesehen sein. Der letzte Verfahrensschritt der Öffnung der beiden Formhälften ist nicht dargestellt. Zusätzlich können in dem Bereich des thermoplastischen Kunststoffmaterials 6 im Auflagebereich in der Positivform oder im Aufnahmebereich der Negativform Heizvorrichtungen vorgesehen sein, wodurch eine Fließfähigkeit des Kunststoffmaterials schon bei geringeren Pressdrücken erreicht wird. Je nach gewünschter Dicke des thermoplastischen Kunststoffmaterials 6, welches den Rahmen oder die Abschlussbereiche des Verbundmaterials bildet, mit welchem das Verbundmaterial mit andere Bauteilen verbunden wird, wird der benötigte Innendruck allein durch die Wahl der Formtoleranzen oder nur durch Kombination der Formtoleranzen mit einer Erwärmung des thermoplastischen Kunststoffmaterials 6 erreicht.

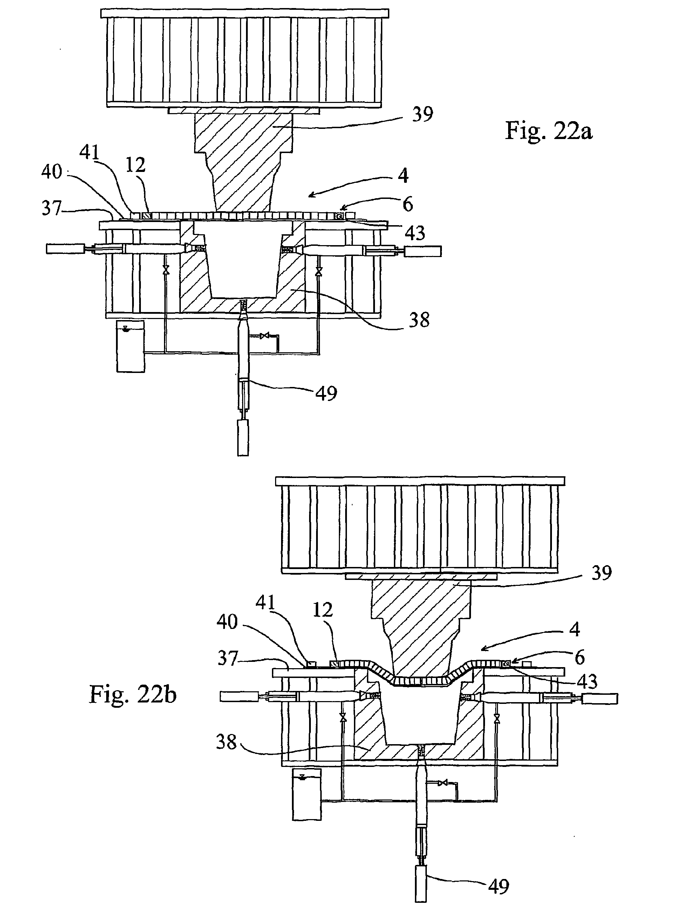

In Fig. 22a wird der erste Verfahrensschritt eines weiteren Ausführungsbeispiels dargestellt. Nach diesem Verfahren wird ein dreidimensionales Formteil aus einem Verbundmaterial 4 hergestellt. Dazu wird ein plattenförmiges Halbzeug auf eine Negativform 38 gelegt. Die Negativform hat eine horizontale Auflagefläche 37, auf welche ein Strang 12 aus einem thermoplastischen, fließfähigen Kunststoffmaterial aufgelegt wird. Der Strang 12 kann ebenfalls einen Hohlraum 43 aufweisen, der mit Druckmittel gefüllt sein kann. Die Positivform 39 ist so weit geöffnet, dass das Verbundmaterial 4 und das thermoplastische Kunststoffmaterial 12 eingelegt werden können.
Zwischen der Negativform 38 und dem Verbundmaterial 4 ist eine Schicht 40 aufgespannt, welche verhindert, dass das Verbundmaterial unkontrolliert in die Öffnung der Negativform fällt. Diese Schicht 40 besteht aus elastischem Material, welches sich unter Ausübung der Pressdrücke nicht mit dem Verbundmaterial verbindet. Dazu ist sie entweder mit haftungsabweisenden Substanzen beschichtet oder lässt sich wie eine Folie abziehen. Wenn die Schicht 40 aus elastischem Material gefertigt ist, und sich nicht mit dem Verbundmaterial 4 oder thermoplastischen Kunststoffmaterial 6 verbindet, kann dieselbe Schicht für eine Anzahl von Presszyklen wieder verwendet werden. In einer anderen Ausführungsart wird die Schicht 40 zwar mit Spannvorrichtungen 41 vorgespannt, allerdings werden die Spannvorrichtungen auf eine begrenzte Zugspannung voreingestellt. Wenn die Zuspannung in der Schicht den voreingestellten Wert übersteigt, wird die Schicht 41 nachgeführt. Insbesondere bei tiefen Bauteilen oder scharfen Kanten der Formteile wird diese Schicht dann nicht überdehnt. Allerdings muss eine minimale Zugspannung gewährleistet sein.
In Fig. 22b ist eine erste Phase des Schließvorgangs der Positivform 39 durch Annäherung an die Negativform 38 dargestellt. Das Verbundmaterial 4 passt sich der Formgeometrie der Positivform 39 an und wird durch die Schicht 40 korrekt positioniert.

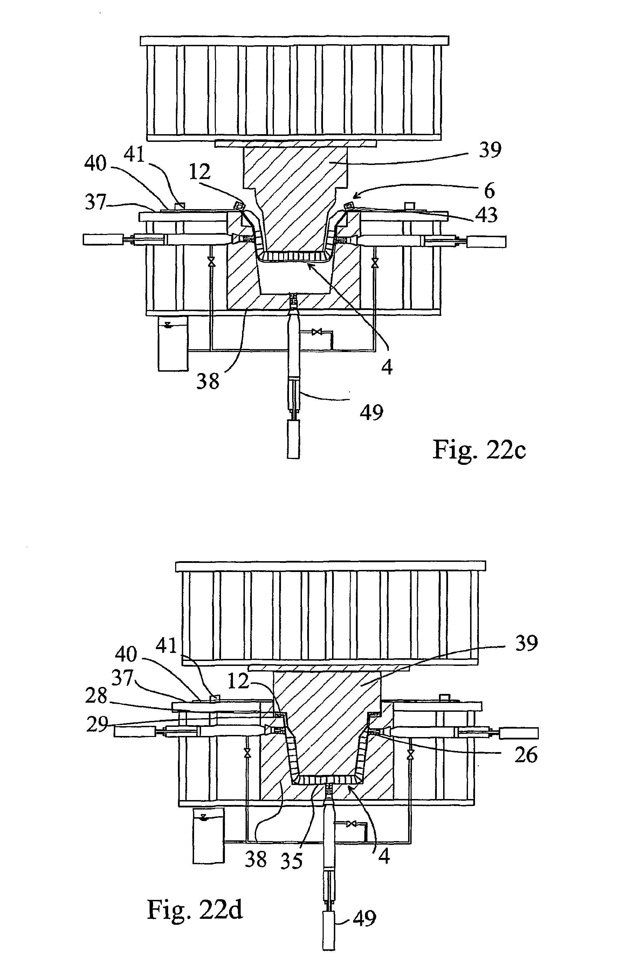

In Fig. 22c ist eine zweite Phase des Schließvorgangs der Positivform 39 durch Annäherung an die Negativform 38 dargestellt. Das Verbundmaterial 4 passt sich der Formgeometrie der Positivform weiter 39 an und wird durch die Schicht 40 und die Wand der Negativform 38 genau positioniert. Der Strang 12 des thermoplastischen Kunststoffmaterials wird mit dem Verbundmaterial mit verschoben und in den Zwischenraum zwischen Positivform und Negativform aufgenommen.
Zusätzlich können in dem Bereich des thermoplastischen Kunststoffmaterials im Auflagebereich in der Positivform oder im Aufnahmebereich der Negativform Heizvorrichtungen vorgesehen sein, wodurch eine Fließfähigkeit des Kunststoffmaterials schon bei geringeren Pressdrücken erreicht wird. Je nach gewünschter Dicke des thermoplastischen Kunststoffmaterials, welches den Rahmen oder die Abschlussbereiche des Verbundmaterials bildet, mit welchem das Verbundmaterial mit andere Bauteilen verbunden wird, wird der benötigte Innendruck allein durch die Wahl der Formtoleranzen oder nur durch Kombination der Formtoleranzen mit einer Erwärmung des thermoplastischen Kunststoffmaterials erreicht.

In Fig. 22d ist dann der Endzustand erreicht. Durch die erhöhte Verpressung des Endabschnitts 26 wird einerseits verhindert, dass das thermoplastische Kunststoffmaterial sich zwischen die beiden Deckschichten in die Strukturschicht einlagert. Wie im ersten und zweiten Ausführungsbeispiel können an die beiden Formhälften Rippen oder Vorsprünge angebracht werden, die eine lokale Einschnürung des Verbundmaterials bewirken und somit eine weitere Barriere für die Ausdehnung des thermoplastischen Kunststoffmaterials darstellen.
Der Abstand der beiden Formhälften entspricht im Bereich der zentralen Auflage des Verbundmaterials 35 der Summe aus der gewünschten Dicke des Verbundmaterials und der Differenz der gewünschten Dicke des thermoplastischen Kunststoffmaterials und der ursprünglichen Dicke des Verbundmaterials. Diese Differenz wird Null, wenn die beiden Dicken identisch sein sollen. Der Abstand des Aufnahmebereichs in der Positivform 28 vom Aufnahmebereich 29 in der Negativform vermindert sich gegenüber dem Abstand der beiden Formhälften im Bereich der zentralen Auflage um die Dicke des Verbundmaterials abzüglich der gewünschten Wandstärke des thermoplastischen Kunststoffmaterials. In dem vorliegenden Ausführungsbeispiel ist eine geringere Dicke des thermoplastischen Kunststoffmaterials vorgesehen. Zudem wird ein fließender Übergang der Dicke des Verbundmaterials zu der Dicke des thermoplastischen Kunststoffmaterials 6 vorgesehen. Dazu hat die Positivform einen Endabschnitt 26, welcher einen von dem Wandabschnitt 36 abweichenden Neigungswinkel aufweist. Im dargestellten Beispiel ist daher ein geringerer Neigungswinkel des Endabschnitts 26 dargestellt.
Der letzte Verfahrensschritt der Öffnung der beiden Formhälften ist nicht dargestellt Allerdings sind mehrere Einspritzvorrichtungen 49 vorgesehen, mittels welchen eine Beschichtung in einen Zwischenraum von 0,5 bis 2 mm zwischen der Negativform 38 und dem aus dem Verbundmaterial 4 und dem thermoplastischen Kunststoffmaterial 6 eingespritzt wird. Der Zeitpunkt des Einspritzens ist somit unmittelbar anschließend an das Signal zum Öffnen der beiden Formhälften. Während des Einspritzens und einer darauf folgenden Abkühlungs- oder Aushärtungsphase der eingespritzten Dekorschicht verbleiben die Formhälften in dem oben angegebenen Abstand. Soll die elastische Schicht 40 durch eine Dekorschicht ersetzt werden, ist zumindest an einer zentral angeordneten Einspritzvorrichtung eine Einstichvorrichtung vorgesehen, welche bei Ausbildung eines geringen Formabstandes ausgelöst wird, um die elastische Schicht zu durchtrennen. Die Vorspannung der elastischen Schicht ist derart gewählt, dass sie sich nach der Durchtrennung durch die mittige Schneidvorrichtung in den Randbereich des Formteils zurückzieht und bei einem Zwischenhub der Positivform 39 einfach entnommen werden kann.
In einer anderen Ausführung ist die elastische Schicht 40 beispielsweise ein Vlies. Diese Schicht wird mit dem thermoplastischen Kunststoffmaterial 6 und dem Verbundmaterial 4 mit verpresst und von dem fließfähigen thermoplastischen Kunststoffmaterial zumindest teilweise umlagert. Durch diese Umlagerung ist das Vlies nach Ende des Pressvorgangs in seiner Position fixiert. Wenn nun die Positivform 39 um wenige Millimeter von der Negativform 38 entfernt wird, verbleibt das Vlies in seiner Position. Durch die symmetrisch angeordneten Einspritzvorrichtungen wirken auch allseits gleiche oder ähnliche Druckkräfte auf die Vliesschicht, sodass es nicht zu einer Verschiebung der Vliesschicht relativ zu dem Verbundmaterial 4 oder dem thermoplastischen Kunststoffmaterial 6 kommen kann. Das Vlies hat somit die Funktion einer Haftvermittlerschicht.
Wie in den vorhergehenden Beispielen ist es möglich, die Einspritzvorrichtungen auch in der Positivform anzuordnen. Grundsätzlich kann jede der beiden Oberflächen des Formteils mit einer Dekorschicht versehen werden.

In Fig. 23a und Fig. 23b ist im Detail dargestellt, welche Möglichkeiten für die Anordnung einer Einspritzvorrichtung bestehen, welche ein Dekormaterial auf eine Kombination von Verbundmaterial 4 mit einem thermoplastischen Kunststoffmaterial 6 aufspritzt. Dabei ist dargestellt, dass die in der Zeichnung linksseitig dargestellte Einsprizvorrichtung in einen flächenartigen Hohlraum, den Einspritzraum 42, einspritzt, welcher sich über dem thermoplastischen Kunststoffmaterial erstreckt.
In Fig. 23a wird der letzte Schritt zur Herstellung eines Bauteils aus mittels des erfindungsgemäßen Verfahrens nach dem Ausführungsbeispiel in Fig. 22a bis Fig. 22d dargestellt
In Fig. 23b ist dargestellt, wie das Dekormaterial 50 den zur Verfügung stehenden Querschnitt ausfüllt. Dazu ist die in Fig. 23a im Schnitt dargestellte Pressform in einer Ansicht von oben dargestellt. Die Positivform 39 wurde weggelassen, sodass man direkt auf das verpresste Verbundmaterial 4 und das thermoplastische Kunststoffmaterial 6 sieht. Um eine gleichmäßige Verteilung des Dekormaterials 50 auf der Oberfläche des Verbundmaterials 4 und des thermoplastischen Kunststoffmaterials 6 zu erreichen, wird der Hochdruckstempel um 0,5 bis 2 mm gegenüber seiner Endposition nach Fig. 22d angehoben, dass das Dekormaterial unter Druck die gesamte Oberfläche des Formteils ausfüllt. Durch den Druck von bis zu 250 bar dringt das Dekormaterial in die mittels eines Vlieses oder dergleichen behaftete Oberfläche des thermoplastischen Kunststoffmaterials 4 und des Verbundmaterials 4 ein und haftet so an demselben. Das Vlies kann auch anstatt der elastischen Schicht 40 vorgesehen sein oder selbst die elastische Schicht ausbilden. Dann wird das Vlies nicht in einem Zwischenhub entnommen, sondern verbleibt während des gesamten Pressvorgangs auf der Oberfläche. Da das thermoplastische Kunststoffmaterial 6 fließfähig wird, hat es sich bereits zumindest teilweise in die Struktur des Vlieses eingelagert, sodass die Position des Vlieses auf der Oberfläche des Formteils fixiert ist. Durch die Verwendung des Vlieses 40 und eventuell darauf angebrachter Haftvermittler haftet die Dekorschicht 50 sowohl auf dem thermoplastischen Kunststoffmaterial wie auch auf dem Verbundmaterial.

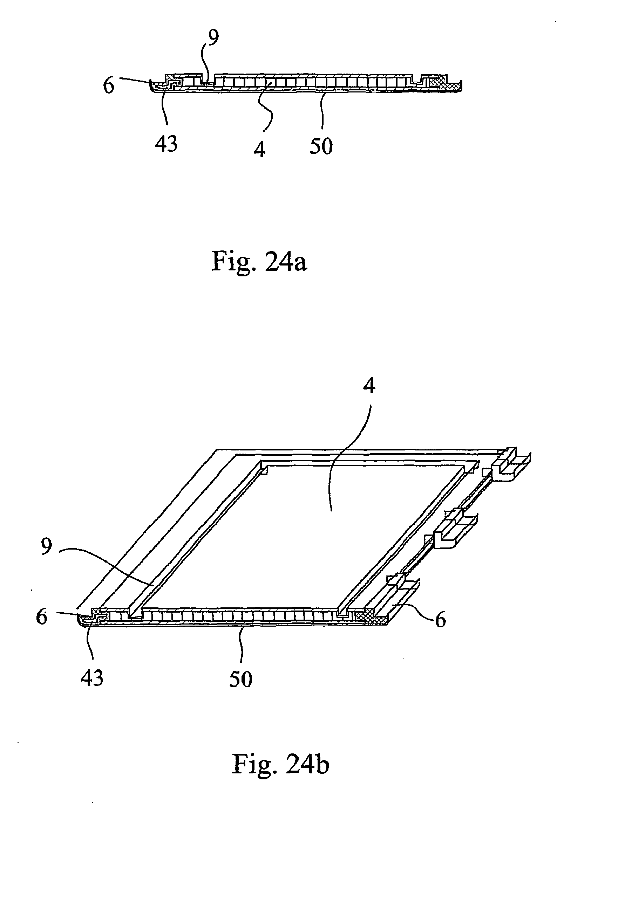

Fig. 24a und Fig. 24b zeigen die Möglichkeit einer Anbringung von Verbindungselementen oder Halteelementen aus fließfähigem thermoplastischen Kunststoff 6 in bestimmten Abschnitten. Der thermoplastische Kunststoff kann wiederum aus einem Wulstmaterial oder Strang bestehen, in welchem ein druckmittelgefüllter Hohlraum 43 angebracht ist.
Das thermoplastische Kunststoffmaterial 6 und das Verbundmaterial 4 sind auf einer Oberfläche von einer Dekorschicht 50 aus Dekormaterial bedeckt, welche mittels einer der vorhergehenden Einspritzanordnungen hergestellt wurde. Diese Dekorschicht 50 kann auch ein duroplastisches Kunststoffmaterial enthalten.

## Patentansprüche

1. Verfahren zur Herstellung eines dünnwandigen Formteils aus Kunststoff, welches ein thermoplastisches Kunststoffmaterial (6) und ein Verbundmaterial (4) mit thermoplastischen Anteilen enthält, wobei in einem ersten Verfahrensschritt das Verbundmaterial (4) in eine Pressform (5) eingelegt wird, **gekennzeichnet dadurch, dass** in einem zweiten, anschließenden, Verfahrensschritt thermoplastisches Kunststoffmaterial (6) an den Randbereichen (30) des Verbundmaterials positioniert wird, in einem dritten, nachfolgenden, Verfahrensschritt ein innerer Stempel (3) auf die Oberfläche des Verbundmaterials abgesenkt wird, währenddessen in einem vierten Verfahrensschritt mindestens ein äußerer Stempel (3) auf das thermoplastische Kunststoffmaterial (6) abgesenkt wird, sodass das Verbundmaterial sich der Innenwand (36, 29) und der Auflagefläche (27, 35) der Pressform (5, 25, 38) anpasst, und in einem fünften Schritt alle Stempel von dem Formteil entfernt werden, und das Formteil der Pressform (5, 25, 38) entnommen wird, und jeder äußere Stempel (3, 24, 39) unter einem Druck arbeitet, bei welchem das thermoplastische Kunststoffmaterial (6) fließfähig wird, sodass Verbundmaterial (4) und thermoplastisches Kunststoffmaterial (6) zusammenschmelzen.

2. Verfahren nach Anspruch 1,
**gekennzeichnet dadurch, dass**
das Verbundmaterial (4) auf eine Pressform (5) mit einem konvexen Profil (25) aufgelegt wird und das Verbundmaterial (4) von einem Stempel mit einem konkaven Profil (24) mit einem Oberflächenverlauf, welcher dem Oberflächenverlauf der Pressform (5) folgt, in eine dreidimensionale Form gepresst wird.

3. Verfahren nach Anspruch 1,
**gekennzeichnet dadurch, dass**
das Verbundmaterial (4) auf eine Pressform (5) mit einem konkaven Profil (38) aufgelegt wird und von einem Stempel mit einem konvexen Profil (39) in eine dreidimensionale Form gepresst wird.

4. Verfahren nach Ansprüchen 2 oder 3,
**gekennzeichnet dadurch, dass**
das thermoplastische Kunststoffmaterial (6) bereits verformt wird, bevor die jeweiligen Stempel (24, 39) und die Pressformen (25, 38) geschlossen sind und das Verbundmaterial (4) seine endgültige Form erhält, wenn die jeweiligen Stempel (24, 39) und die Pressformen (25, 39) geschlossen sind.

5. Verfahren nach Anspruch 1,
**gekennzeichnet dadurch, dass**
bei geschlossenen Formhälften ein Druck von maximal 20 bar auf das Verbundmaterial (4) aufgebracht wird.

6. Verfahren nach Anspruch 1,
**gekennzeichnet dadurch, dass**
bei geschlossenen Formhälften ein Druck von maximal 250 bar auf das thermoplastische Kunststoffmaterial (6) aufgebracht wird.

7. Verfahren nach Anspruch 1,
**gekennzeichnet dadurch, dass**
das Verbundmaterial durch mindestens einen im Stempel (3, 24, 39) vorgesehenen Vorsprung (8) oder Endabschnitt (26) gepresst wird.

8. Verfahren nach Anspruch 1,
**gekennzeichnet dadurch, dass**
ein im Inneren des thermoplastischen Kunststoffmaterials (6) ausgebildeter Hohlraum (42, 43) während des Pressvorganges durch den sich aufbauenden Druck eines Druckmittels bestehen bleibt.

9. Verfahren nach Anspruch 8,
**gekennzeichnet dadurch, dass**
das Druckmittel durch eine in der Pressform (5, 25, 38) angebrachte Zuleitung (44) eingeleitet wird.

10. Verfahren nach Anspruch 8,
**gekennzeichnet dadurch, dass**
die Zuleitung eine Stichvorrichtung (45) enthält.

11. Verfahren nach Anspruch 10,
**gekennzeichnet dadurch, dass**
mittels der Stichvorrichtung (45) der Wandbereich des thermoplastischen Kunststoffmaterials (6) durchstochen wird, wobei die Stichvorrichtung (45) in den Hohlraum (43) hinein reichen kann.

12. Verfahren nach Anspruch 8,
**gekennzeichnet dadurch, dass**
sich das Druckmittel bereits vor der Einlage des thermoplastischen Kunststoffmaterials (6) im Hohlraum (43) des thermoplastischen Kunststoffmaterials (6) befindet und während des Pressvorgangs im thermoplastischen Kunststoffmaterial (6) verbleibt.

13. Verfahren nach einem der vorhergehenden Ansprüche,
**gekennzeichnet dadurch, dass**
in einem weiteren, optionalen Verfahrensschritt alle Stempel von dem verbundenen thermoplastischen Kunststoffmaterial (6) und dem Verbundmaterial (4) um ein geringes Maß entfernt werden, sodass ein Zwischenraum entsteht, in welchen eine Beschichtung eingespritzt wird.

## Claims

1. A method for the production of a thin-walled moulded part made from plastic, which contains a thermoplastic material (6) and a composite material (4) having thermoplastic constituents, whereby the composite material (4) is placed inside a compression mould (5) in a first method step,
**characterised in that** in a second, following method step thermoplastic material (6) is positioned at the edge regions (30) of the composite material, in a third, following method step an inner male die (3) is lowered onto the surface of the composite material, in the meantime in a fourth method step at least one outer male die (3) is lowered onto the thermoplastic material (6) so that the composite material adapts to the inner wall (36, 29) and the contact surface (27, 35) of the compression mould (5, 25, 38), and in a fifth step all the male dies are removed from the moulded part, and the moulded part is removed from the compression mould (5, 24, 38), and each outer male die (3, 24, 39) works under a pressure at which the thermoplastic material (6) becomes capable of flowing so that the composite material (4) and the thermoplastic material (6) fuse together.

2. A method according to Claim 1,
**characterised in that** the composite material (4) is placed onto a compression mould (5) having a convex profile (25) and the composite material (4) is pressed into a three-dimensional shape by a male die having a concave profile (24) having a surface shape that follows the surface shape of the compression mould (5).

3. A method according to Claim 1,
**characterised in that** the composite material (4) is placed onto a compression mould (5) having a concave profile (38) and is pressed into a three-dimensional shape by a male die having a convex profile (39).

4. A method according to Claims 2 or 3,
**characterised in that** the thermoplastic material (6) is already shaped before the respective male dies (24, 39) and the moulds (25, 38) are closed and the composite material (4) obtains its final shape when the respective male dies (24, 39) and the moulds (25, 39) are closed.

5. A method according to Claim 1,
**characterised in that** with the mould halves closed, a maximum pressure of 20 bars is applied to the composite material (4).

6. A method according to Claim 1,
**characterised in that** with the mould halves closed, a maximum pressure of 250 bars is applied to the thermoplastic material (6).

7. A method according to Claim 1,
**characterised in that** the composite material is pressed by at least one projection (8) or end portion (26) provided in the male die (3, 24, 39).

8. A method according to Claim 1,
**characterised in that** a cavity (42, 43) provided in the interior of the thermoplastic material (6) remains during the pressing operation by the build-up of pressure of a pressure medium.

9. A method according to Claim 8,
**characterised in that** the pressure medium is introduced through a feed line (44) mounted in the compression mould (5, 25, 38).

10. A method according to Claim 8,
**characterised in that** the feed line contains a piercing device (45).

11. A method according to Claim 10,
**characterised in that** the wall region of the thermoplastic material (6) is pierced by means of the piercing device (45), whereby the piercing device (45) can extend into the cavity (43).

12. A method according to Claim 8,
**characterised in that** the pressure medium is located in the cavity (43) of the thermoplastic material (6) prior to the insertion of the thermoplastic material (6) and remains in the thermoplastic material (6) during the pressing operation.

13. A method according to one of the preceding Claims,
**characterised in that** in an additional, optional method step all male dies are removed from the connected thermoplastic material (6) and the composite material (4) by a slight distance so that a space is provided into which a coating is injected.

## Revendications

1. Procédé de fabrication d'une pièce moulée à parois minces en matière plastique, contenant une matière thermoplastique (6) et une matière composite (4) à composantes thermoplastiques,
selon lequel
dans une première étape de procédé on place la matière composite (4) dans un moule de compression (5),
**caractérisé en ce que**
dans une seconde étape de procédé on place de la matière thermoplastique (6) contre les zones marginales (30) de la matière composite,
dans une troisième étape suivante, on descend un poinçon intérieur (3) contre la surface supérieure de la matière composite et pendant une quatrième étape de procédé, on abaisse au moins un poinçon extérieur (3) sur la matière thermoplastique (6) pour que la matière composite s'adapte à la paroi intérieure (36, 29) et à la surface d'appui (27, 35) du moule de compression (5, 28, 38),
et dans une cinquième étape on enlève tous les poinçons de la pièce formée et on extrait cette pièce hors du moule de compression (5, 25, 38), et
chaque poinçon extérieur (3, 24, 39) travaille à une pression à laquelle la matière thermoplastique (6) est fluente pour que la matière composite (4) et la matière thermoplastique (6) fusionnent.

2. Procédé selon la revendication 1,
**caractérisé en ce que**
la matière composite (4) est appliquée sur un moule de compression (5) avec un profil convexe (25), et
on comprime pour mouler la matière composite (4) avec un poinçon à profil concave (24) avec une surface suivant la forme de la surface du moule de compression (5) pour obtenir une forme tridimensionnelle.

3. Procédé selon la revendication 1,
**caractérisé en ce que**
l'on place la matière composite (4) sur un moule de compression (5) à profil concave (38) et on presse avec un poinçon à profil convexe (39) pour avoir une forme tridimensionnelle.

4. Procédé selon les revendications 2 ou 3,
**caractérisé en ce qu'**
on déforme la matière thermoplastique (6) avant de fermer le poinçon respectif (24, 39) et les moules de compression (25, 38) et la matière composite (4) prend sa forme définitive lorsqu'on ferme le poinçon respectif (24, 39) et les moules de compression (25, 39).

5. Procédé selon la revendication 1,
**caractérisé en ce que**
lorsque les moitiés de moules sont fermées, on applique une pression égale au maximum à 20 bars sur la matière composite (4).

6. Procédé selon la revendication 1,
**caractérisé en ce que**
lorsque les moitiés de moules sont fermées on exerce une pression maximale de 250 bars sur la matière composite thermoplastique (6).

7. Procédé selon la revendication 1,
**caractérisé en ce que**
l'on presse la matière composite par au moins une partie en saillie (8) prévue dans le poinçon (3, 24, 39) ou un segment d'extrémité (26).

8. Procédé selon la revendication 1,
**caractérisé en ce qu'**
on laisse subsister une cavité (42, 43) réalisée à l'intérieur de la matière thermoplastique (6) pendant l'opération de compression pour conserver la pression qui s'établit dans l'agent de compression.

9. Procédé selon la revendication 8,
**caractérisé en ce que**
l'agent de pression est fourni par une conduite d'alimentation (44) installée sur le moule de presse (5, 25, 38).

10. Procédé selon la revendication 8,
**caractérisé en ce que**
la conduite d'alimentation comporte un dispositif de perforation (45).

11. Procédé selon la revendication 10,
**caractérisé en ce que**
le dispositif de perforation (45) perce la zone de la paroi de matière thermoplastique (6) et ce dispositif de perforation (45) peut atteindre la cavité (43).

12. Procédé selon la revendication 8,
**caractérisé en ce que**
l'agent de pression se trouve dès avant la mise en place de la matière thermoplastique (6) dans la cavité (43) de la matière thermoplastique (6) et reste dans la matière plastique (7) pendant l'opération de compression.

13. Procédé selon l'une des revendications précédentes,
**caractérisé en ce que**
dans une autre étape de procédé, en option, on éloigne tous les poinçons par rapport à la matière thermoplastique (6) liée et la matière composite (4) d'une faible mesure pour arriver à un espace intermédiaire dans lequel on injecte un revêtement.
